# EUROPÄISCHE PATENTSCHRIFT

(11) **EP 3 953 830 B1**
(45) Veröffentlichungstag und Bekanntmachung des Hinweises auf die Patenterteilung: **31.05.2023**
(21) Anmeldenummer: 20714650.7
(22) Anmeldetag: 03.04.2020
(51) Int. Cl.: H04L 9/40, H04L 67/12, H04L 9/00, H04L 9/32, G06F 21/64, G06F 16/18, H04L 67/1097

(54) **VERFAHREN UND SYSTEM ZUM SICHEREN BEREITSTELLEN VON DATEN EINES GEGENSTANDS ÜBER DESSEN GESAMTEN LEBENSZYKLUS**
METHOD AND SYSTEM FOR SECURELY PROVIDING DATA OF AN OBJECT OVER THE ENTIRE LIFE CYCLE
PROCÉDÉ ET SYSTÈME DE FOURNITURE SÉCURISÉE DE DONNÉES D'UN OBJET SUR SON CYCLE DE VIE COMPLET

(30) Priorität: 09.04.2019 BE 201905230
(43) Veröffentlichungstag der Anmeldung: 16.02.2022
(73) Patentinhaber: Phoenix Contact GmbH & Co. KG, 32825 Blomberg (DE)
(72) Erfinder: WESCH-POTENTE, Cathrin, 32760 Detmold (DE); HEISSMEYER, Sven, 31855 Aerzen (DE); KALHOFF, Johannes, 32657 Lemgo (DE); VOLGMANN, Soeren, 32760 Detmold (DE)
(74) Vertreter: Blumbach · Zinngrebe Patentanwälte PartG mbB
(86) Internationale Anmeldenummer: PCT/EP2020/059538
(87) Internationale Veröffentlichungsnummer: WO 2020/207913

(56) Entgegenhaltungen:
- WO-A1-2018/164695
- WO-A1-2018/200215
- WO-A1-2018/223042
- DE-A1-102016 118 614
- US-A1- 2017 236 094

## Beschreibung

Die vorliegende Erfindung betrifft ein Verfahren zum sicheren Bereitstellen von Daten eines Gegenstands über dessen gesamten Lebenszyklus sowie ein System, welches zur Durchführung dieses Verfahrens ausgebildet ist.

Der Produktlebenszyklus von elektrotechnischen Produkten und deren Zusammenstellungen erstreckt sich in vernetzter Weise über eine Vielzahl an Organisationseinheiten. Die Richtlinie VDI/VDE 2182 beschreibt Abhängigkeiten zwischen Herstellern von Automatisierungslösungen, Maschinenbauern und Systemintegratoren sowie den Betreibern von Fertigungs- und Prozessanlagen. Die Richtlinie verfolgt einen risikobasierten Ansatz, der die Automatisierungslösung zunächst als Betrachtungsgegenstand bezeichnet. Der Betrachtungsgegenstand durchläuft verschiedene Lebenszyklusphasen (Herstellung, Integration, Betrieb). Hier muss beachtet werden, dass eine Lebenszyklusphase nicht zwangsweise auf eine einzelne Organisation beschränkt ist.

Product Lifecycle Management (PLM) ist ein Konzept zur integrierten Zusammenführung aller im Lebenszyklus eines Produktes anfallenden Daten. Die Kernfunktionen eines PLM Systems sind Produktstrukturierung und Dokumentenmanagement. Die Funktionen folgen dabei mehr oder weniger streng einem überlagerten Vorgehensmodell zum Konfigurationsmanagement (z.B. CMII, ANSI649, ISO10007). Das Konfigurationsmanagement umfasst Methoden zur Verwaltung von Konfigurationsobjekten (sog. Configuration Items):
- Identifikation und Benennung von Konfigurationsobjekten,
- Identifikation von Konfigurationsänderungen,
- Freigabe von Konfigurationsänderungen,
- Audit von Konfigurationen.

PLM ist also eigentlich ein organisationsübergreifender Prozess und erfordert Modelle für Identitäten, Änderungsstände, Freigaben und Auditierbarkeit.

PLM wird traditionell jedoch aus Sicht einer einzelnen Organisation betrieben und in deren IT-Systemen umgesetzt. Führende konventionelle PLM-Lösungen sind zum Beispiel Siemens Teamcenter oder die ARAS PLM Plattform. Das Angebot richtet sich jeweils an Unternehmen, die ihre PLM-Prozesse verbessern wollen. Die systemtechnische Ausprägung reicht von on-site-Installationen bis zu Cloud-Installationen. Bei on-site-Installationen läuft das gesamte PLM-System beim Anwenderunternehmen auf unternehmenseigener Infrastruktur, bei Cloud-Installationen in einer zentral gehosteten Infrastruktur im Internet. Die oben erwähnten Methoden zur Verwaltung von Konfigurationsobjekten werden durch konventionelle PLM-Lösungen beispielsweise wie folgt umgesetzt:
- Identifikation und Benennung von Konfigurationsobjekten:
   Konfigurationsobjekte werden durch eine benutzerdefinierte oder automatisch fortgezählte Zeichenfolge (z.B. Teilenummer) identifiziert. Benutzer werden durch Benutzernamen identifiziert und durch Passwörter authentifiziert. Diese Informationen werden in Identitätsmanagementsystemen (z.B. Microsoft Active Directory) innerhalb eines Unternehmens verwaltet.
- Identifikation von Konfigurationsänderungen: Änderungen der Konfigurationsobjekte werden durch eine fortlaufende Nummerierung (Änderungsindex) identifiziert.
- Freigabe von Konfigurationsänderungen: Auf der Basis von Role-Based Access wird unternehmensintern der Zugriff auf die Konfigurationsobjekte autorisiert.

Die Systemunterstützung für organisationsübergreifende PLM-Prozesse scheitert daher an organisationsabhängig unterschiedlichen Umsetzungen von Aspekten wie der Authentifizierung und Autorisierung, der Kennzeichnung von Änderungsständen sowie den Abläufen zur Änderung von Daten. Es liegt auf der Hand, dass somit ein Audit von Konfigurationen ebenfalls nicht organisationsübergreifend erfolgen kann.

Ein modernes PLM erfordert daher Modelle für Identitäten, Änderungsstände, Freigaben und Auditierbarkeit, die auch organisations- bzw. unternehmensübergreifend umsetzbar sind.

Ein Blick auf aktuelle Trends, die oft mit Schlagworten wie "Industrie 4.0" oder "Internet der Dinge" (Internet of Things, IoT) bezeichnet werden, lässt das Erfordernis eines organisationsübergreifend funktionierenden PLM umso dringlicher erscheinen.

Mit dem von der Plattform Industrie 4.0 entwickelten "Referenzarchitekturmodell Industrie 4.0" (RAMI 4.0) und der "Industrie-4.0-Komponente" wurden zwei Werkzeuge geschaffen, um bestehende Standards und Technologien überschaubar zu machen. Das Neue an der Industrie-4.0-Komponente ist die Erweiterung eines jeweiligen physischen Gegenstands um die Verwaltungsschale. Die Verwaltungsschale ist ein virtuelles Abbild des physischen Gegenstands und beschreibt dessen Funktionalitäten. Die Industrie-4.0-Komponente kann somit sich selbst beschreiben und führt ganze Datensammlungen über ihren Lebenszyklus mit sich. Auch die Industrie-4.0-konforme Kommunikation erfolgt über die Verwaltungsschale der Industrie-4.0-Komponente. Produkte und Betriebsmittel, die als Industrie-4.0-Komponenten ausgelegt sind, können sowohl in der Fabrik als auch unternehmensübergreifend miteinander kommunizieren.

Aufgabe der Erfindung ist es, ein Verfahren und ein System zum sicheren Bereitstellen von Daten eines Gegenstands über dessen gesamten Lebenszyklus bereitzustellen, welche ein organisationsübergreifend funktionierendes PLM ermöglichen.

Im Rahmen der Erfindung werden Produkte bzw. Konfigurationsobjekte auch als Gegenstände bezeichnet. Im Folgenden wird die Erfindung am Beispiel von Produkten und Betriebsmitteln aus dem Bereich der Automatisierungstechnik beschrieben. Grundsätzlich ermöglicht die Erfindung aber ein organisationsübergreifend funktionierendes PLM für beliebige Gegenstände.

Wichtige Gegenstände im Bereich der Automatisierungstechnik sind zum Beispiel Feldgeräte, die in industriellen Anlagen, in der Prozessautomatisierungstechnik und in der Fertigungsautomatisierungstechnik zum Einsatz kommen. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Messgeräte, bzw. Sensoren. Zur Beeinflussung von Prozessgrößen werden Aktoren verwendet. In modernen Industrieanlagen sind Feldgeräte in der Regel über Kommunikationsnetzwerke wie beispielsweise Feldbusse (Profibus ^{®}, Foundation ^{®} Fieldbus, HART ^{®} , etc.) mit übergeordneten Einheiten verbunden. Normalerweise handelt es sich bei den übergeordneten Einheiten um Steuereinheiten, wie beispielsweise eine SPS (speicherprogrammierbare Steuerung) oder einen PLC (Programmable Logic Controller). Die übergeordneten Einheiten dienen unter anderem zur Prozesssteuerung sowie zur Inbetriebnahme, Konfiguration und Parametrierung von Feldgeräten.

Im industriellen Umfeld wird eine Konfiguration einer Vielzahl von Geräten, welche innerhalb eines Automatisierungsnetzwerkes vorgesehen sind, durchgeführt. Dabei sind Konfigurationsdaten auf ihre Unversehrtheit oder Gültigkeit oder Herkunft hin zu überprüfen. Beispielsweise muss sichergestellt werden, dass unmanipulierte Parameter oder ein intaktes Programm oder eine passende Konfiguration in den Konfigurationsdaten enthalten sind, um beispielsweise Safety- oder Security-Anforderungen zu genügen.

Die Offenlegungsschrift DE 10 2016 118 614 A1 beschreibt Verfahren zum manipulationssicheren Speichern von Daten eines Feldgeräts unter Nutzung von Blockchain-Technologie.

Die Offenlegungsschrift DE 10 2016 215 915 A1 beschreibt ein Verfahren zum sicheren Konfigurieren eines Gerätes unter Nutzung von Blockchain-Technologie.

Aus der WO 2018/164695 A1 ist ein Verfahren zum effizienten Speichern und Überprüfen von Datensätzen bekannt. Das Verfahren umfasst den Schritt des Empfangens eines ersten Hashwertes erster Interaktionsdaten, den Schritt des Ermittelns eines Interaktions-Identifizierers, der dem ersten Haskwert zugeordnet ist, wobei der erste Hashwert zusammen mit dem Interaktions-Identifizierer in einer Datenbank gespeichert wird. Ferner wird ein Root-Hashwert eines Hash-Baums bestimmt. Zudem kann der Root-Hashwert einer öffentlichen Blockchain bereitgestellt werden. Jeder Block der Blockchain kann einen Link zu einem vorherigen Block sowie eine Merkle-Root enthalten, die aus den Hashwerten aller Interaktionen und Transaktionen, die in dem Block enthalten sind, abgeleitet werden.

Dem genannten Stand der Technik ist jedoch keine Lösung für ein organisationsübergreifend funktionierendes PLM zu entnehmen.

Bei der Lösung der obengenannten Aufgabe der Erfindung können vorzugsweise auch folgende Aspekte Berücksichtigung finden:
- Authentifizierung,
- Autorisierung,
- Kollaboration mehrerer Akteure,
- Abläufe zur Änderung von Daten,
- Kennzeichnung von Änderungsständen,
- Freigabe von Änderungsständen,
- Vertraulichkeit (englisch: confidentiality):
   Daten dürfen lediglich von autorisierten Benutzern gelesen bzw. modifiziert werden, dies gilt sowohl beim Zugriff auf gespeicherte Daten, wie auch während der Datenübertragung;
- Integrität (englisch: integrity):
   Daten dürfen nicht unbemerkt verändert werden. Alle Änderungen müssen nachvollziehbar sein;
- Verfügbarkeit (englisch: availability):
   Verhinderung von Systemausfällen; der Zugriff auf Daten muss innerhalb eines vereinbarten Zeitrahmens gewährleistet sein;
- Authentizität (englisch: authenticity):
   Bezeichnet die Eigenschaften der Echtheit, Überprüfbarkeit und
   Vertrauenswürdigkeit eines Objekts;
- Verbindlichkeit/Nichtabstreitbarkeit (englisch: non repudiation):
   Es ist kein unzulässiges Abstreiten durchgeführter Handlungen möglich;
- Zurechenbarkeit (englisch: accountability):
   Eine durchgeführte Handlung kann einem Kommunikationspartner eindeutig zugeordnet werden;
- Auditierbarkeit:
   Die Einhaltung der zuvor genannten Aspekte kann gegenüber einer dritten Partei nachgewiesen werden.

Zur Lösung der Aufgabe schlägt die Erfindung insbesondere ein Verfahren mit den Merkmalen des Patentanspruchs 1 sowie ein System mit den Merkmalen des unabhängigen Patentanspruchs 20 vor. Weitere vorteilhafte Ausgestaltungen des erfindungsgemäßen Verfahrens und Systems sind in den abhängigen Patentansprüchen angegeben. Dabei gelten die zu dem erfindungsgemäßen Verfahren angegebenen Merkmale und Vorteile sinngemäß auch für das erfindungsgemäße System.

Vorgeschlagen wird demnach ein Verfahren zum sicheren Bereitstellen von Daten eines Feldgeräts der Automatisierungstechnik über dessen gesamten Lebenszyklus, wobei der Lebenszyklus des Feldgeräts bereits vor seiner Herstellung beginnt, wobei das Feldgerät vor seiner Herstellung als Feldgerättyp vorliegt, und wobei das Feldgerät mit Beginn seiner Herstellung als wenigstens eine Feldgerätinstanz vorliegt, wobei jede Feldgerätinstanz von dem Feldgerättyp abgeleitet ist, und wobei jeder Feldgerättyp und jede Feldgerätinstanz durch eine jeweilige eigene Entität repräsentiert wird, die anhand einer kryptografischen Identität identifizierbar gemacht wird, indem für jede Entität ein asymmetrisches Schlüsselpaar, umfassend einen öffentlichen und einen privaten Schlüssel, generiert wird, und der eine Adresse, insbesondere eine eindeutige Adresse, zugeordnet wird. Dabei umfasst das Verfahren die folgenden weiteren Schritte:
- a) Erzeugen von Daten, die den Feldgerättyp oder die Feldgerätinstanz betreffen,
- b) Generieren eines zweiten Hashwerts basierend auf den Daten aus Schritt a) mittels einer kryptographischen Hashfunktion,
- c) Erzeugen eines Änderungsstandes,
- d) Speichern der Daten aus Schritt a) und des zweiten Hashwerts als Nutzdaten, insbesondere Nutzdaten des Änderungsstands, in dem Änderungsstand aus Schritt c),
- e) Generieren eines dritten Hashwerts basierend auf dem Änderungsstand mittels einer kryptographischen Hashfunktion, wobei der dritte Hashwert als Adresse des Änderungsstands dient,
- f) Erzeugen eines Datenobjekts,
- g) Speichern des Änderungsstands und des dritten Hashwerts in dem Datenobjekt aus Schritt f),
- h) Speichern des Datenobjekts in einem dezentral verteilten inhaltsadressierten Speichersystem, wobei in Schritt d) im Fall einer neu aus dem Feldgerättyp abgeleiteten Feldgerätinstanz in dem in Schritt c) erzeugten Änderungszustand dieser Feldgerätinstanz zusätzlich zu den Nutzdaten der dritte Hashwert eines Änderungszustands des Feldgerättyps als Zusatzdaten gespeichert wird.

Das erfindungsgemäße Verfahren bringt viele Vorteile mit sich. So bietet es eine eindeutige und zuverlässige Identifikation und Benennung von Konfigurationsobjekten, die als Gegenstände bezeichnet werden können. Ferner bietet es eine eindeutige und zuverlässige Identifikation und Benennung von Konfigurationsänderungen (Änderungsständen), nämlich anhand von Hashwerten. Hashwerte stellen auch die Integrität der Daten eines Feldgeräts sicher. Ferner kann im Gegensatz zu zentral gehosteten PLM-Systemen ein dezentral verteiltes inhaltsadressiertes Speichersystem flexibler, einfacher skalierbar, performanter, frei verfügbar und ausfallsicherer sein. Auf diese Weise ermöglicht das Verfahren ein PLM, das organisationsübergreifend und damit tatsächlich über den gesamten Produktlebenszyklus hinweg betrieben werden kann.

Dabei können die Daten des Feldgeräts über dessen Lebenszyklus sämtliche das Feldgerät betreffende Daten sein, die vor, während und/oder nach dessen Herstellung erzeugt werden bzw. wurden und weiterhin bereitstehen sollen. Das Feldgerät kann dabei ein Produkt oder Betriebsmittel, eine Anlage, eine Maschine, eine Komponente, eine Software oder ganz allgemein ein Objekt sein. Das Erzeugen dieser Daten gemäß Schritt a) kann dabei das Erzeugen neuer und/oder geäderter Daten bedeuten.

Die eigene oder spezifische Entität, welche jeweils ein Feldgerät repräsentiert, stellt ein virtuelles Abbild des Feldgeräts dar, welches mittels der Daten das Feldgerät beschreibt. Mit Blick auf RAMI 4.0 entspricht die Entität somit im Wesentlichen der Verwaltungsschale einer Industrie-4.0-Komponente. In der Datenmodellierung wird als Entität ein eindeutig zu bestimmendes Objekt bezeichnet, über das Informationen gespeichert oder verarbeitet werden sollen. Das Objekt kann materiell oder immateriell, konkret oder abstrakt sein.

Zur Verknüpfung eines feldgeräts mit der ihn repräsentierenden Entität gibt es verschiedene Möglichkeiten. Beispielsweise kann der private und/oder öffentliche Schlüssels des asymmetrischen Schlüsselpaars der Entität und/oder die Adresse der Entität in einem Speichermodul des Feldgeräts gespeichert sein, wobei das Speichermodul insbesondere ein sicheres Hardwaremodul, etwa ein Trusted Platform Module (TPM), ist. Oder es kann beispielsweise die Adresse der Entität auf der Oberfläche des Feldgeräts optisch erfassbar, insbesondere als ein zweidimensionaler Code, insbesondere QR-Code, oder als Uniform Resource Identifier (URI) oder ähnliches, aufgebracht sein. Dabei bräuchte beispielsweise ein als Adresse fungierender erste Hashwert aber auch gar nicht gespeichert werden, da er immer aus dem öffentlichen Schlüssel ableitbar ist.

Eine Weiterbildung des Verfahrens sieht zum Beispiel vor, dass als Adresse der Entität der öffentliche Schlüssel der Entität, oder ein erster Hashwert dient, der mittels einer kryptografischen Hashfunktion basierend auf dem öffentlichen Schlüssel der Entität generiert wird. Somit bietet das Verfahren eine eindeutige und zuverlässige Identifikation und Benennung von Konfigurationsobjekten, d.h. Feldgeräte, nämlich anhand von öffentlichen kryptografischen Schlüsseln oder Hashwerten. Dabei hat der erste Hashwert im Vergleich zum öffentlichen Schlüssel den Vorteil, dass er deutlich kürzer ist. Grundsätzlich kann aber auch der öffentliche Schlüssel als Adresse verwendet werden.

Eine weitere Weiterbildung des Verfahrens sieht zum Beispiel vor, dass die das Feldgerät betreffenden Daten Merkmale des Feldgeräts spezifizieren. Beispielsweise können solche Daten Eigenschaften und Funktionen des Feldgeräts beschreiben. Es können etwa Gerätekonfigurationsinformationen sein, welche zum Beispiel Projektierungsparameter, Betriebsmodusinformationen, Lizenz- oder Berechtigungsinformationen, Sicherheitszoneninformationen, Informationen zu Patches oder Softwareupdates, Vorschriften für zulässige Konfigurationseinstellungen umfassen. Beispielsweise werden als Projektierungsparameter Schwellenwerte oder Regelungsparameter angegeben. Ferner sind vorteilhafter Weise Verfügbarkeits- oder Freigabeinformationen zu einer einem Softwarecode einem Patch oder einer Firmware, wie beispielsweise Ausführungsberechtigungen auf bestimmten Geräten oder Gerätetypen oder Lizenzinformationen enthalten. Weitere Beispiele für das Feldgerät betreffende Daten sind Handbücher, Schaltpläne und CAD-Zeichnungen. Vorteilhafter Weise kann es sich also bei den Daten des Feldgeräts um im Wesentliche beliebige Daten handeln.

Eine weitere Weiterbildung des Verfahrens sieht vor, dass die in einem Änderungsstand gespeicherten das Feldgerät betreffenden Daten in Dateien und Ordnern hierarchisch strukturiert sind, wobei beginnend an der untersten Hierarchieebene bis zur obersten Hierarchieebene schrittweise je nach Anzahl vorhandener Dateien und/oder Ordner mindestens ein Dateihashwert und/oder Ordnerhashwert generiert wird. Dabei wird für jede Datei ein Dateihashwert basierend auf deren Dateiinhalt mittels einer kryptographischen Hashfunktion generiert. Ferner wird für jeden nur eine Anzahl von Dateien enthaltenen Ordner ein Ordnerhashwert basierend auf den Dateinamen und Dateihashwerten der im Ordner enthaltenen Dateien mittels einer kryptographischen Hashfunktion generiert. Ferner wird für jeden nur eine Anzahl von Ordnern enthaltenen Ordner ein Ordnerhashwert generiert basierend auf den Ordnernamen und Ordnerhashwerten der im Ordner enthaltenen Ordner mittels einer kryptographischen Hashfunktion. Ferner wird für jeden eine Anzahl von Ordnern und eine Anzahl von Dateien enthaltenen Ordner ein Ordnerhashwert basierend auf den Ordnernamen und Ordnerhashwerten der im Ordner enthaltenen Ordner sowie basierend auf den Dateinamen und Dateihashwerten der im Ordner enthaltenen Dateien mittels einer kryptographischen Hashfunktion generiert. Schließlich wird mittels einer kryptographischen Hashfunktion in Schritt b) der zweite Hashwert basierend auf den Ordnernamen und Ordnerhashwerten der auf der obersten Hierarchieebene vorhandenen Ordner und/oder basierend auf den Dateinamen und Dateihashwerten der auf der obersten Hierarchieebene vorhandenen Dateien generiert.

Vorteilhafter Weise können somit die Daten eines Feldgeräts beliebig komplexe Strukturen aufweisen, ohne dass dies Einfluss auf die erzielbare Sicherheit der Daten insbesondere hinsichtlich deren Integrität hat. Dabei kann die Strukturierung der ein Feldgerät betreffenden Daten in Dateien und Ordner, die zu Änderungsständen gehören, welche andere Änderungsstände referenzieren, beispielsweise gemäß dem Datenmodell des Versionskontrollsystems GIT ausgestaltet sein.

Eine weitere Weiterbildung des Verfahrens sieht vor, dass in Schritt d) zusätzlich zu den Nutzdaten ein Änderungsautor, ein Änderungsdatum, eine Änderungszeit, ein Änderungsbeschreibungstext und/oder ein Datenvolumenwert, als Zusatzdaten in dem im Schritt c) erzeugten Änderungsstand gespeichert werden. Diese Zusatzdaten können insbesondere als Metadaten des Änderungsstands gespeichert werden. Vorteilafter Weise stehen somit diese Zusatzdaten bzw. Metadaten bezüglich eines Änderungsstands, insbesondere bezüglich jeden Änderungsstand, unmittelbar zur Verfügung und erlauben so zum Beispiel eine schnelle Beurteilung der enthaltenen Daten etwa hinsichtlich Aktualität oder Relevanz.

Eine weitere Weiterbildung des Verfahrens sieht zum Beispiel zur Zuordnung von Entität und Änderungsstand vor, dass in Schritt d) zusätzlich zu den Nutzdaten die Adresse wenigstens einer Entität als Zusatzdaten in dem in Schritt c) erzeugten Änderungsstand gespeichert wird. Eine weitere Möglichkeit der Zuordnung von Entität und Änderungsstand wird an späterer Stelle beschrieben.

Eine weitere Weiterbildung des Verfahrens sieht vor, dass im Schritt g) für den Änderungsstand ein Name erzeugt und dem Änderungsstand zugeordnet wird und ebenfalls in dem in Schritt f) erzeugten Datenobjekt gespeichert wird. Dieser Name kann eine sprechende Bezeichnung des Änderungsstands sein, wie zum Beispiel "Einbauzustand", "Geplanter Zustand" oder "Version 1.0", der für den Anwender leichter zu verstehen und zu merken ist als ein Hashwert. Dadurch wird das gezielte Sichten oder Vergleichen von mehreren Änderungsständen, zum Beispiel beim Vorschlagen und Übernehmen von Änderungen, erleichtert, insbesondere da nicht immer der "aktuellste" Änderungsstand wichtig ist bzw. benötigt wird.

Eine weitere Weiterbildung des Verfahrens sieht vor, dass in Schritt d) in dem Änderungsstand zusätzlich zu den Nutzdaten der dritte Hashwert eines älteren Änderungsstands oder die dritten Hashwerte mehrerer älterer Änderungsstände als Zusatzdaten in dem Änderungsstand aus Schritt c) gespeichert wird bzw. werden. Zusatzdaten können also auch Verweisdaten bzw. als Verweise oder Zeiger dienende Adressdaten sein. Auf diese einfache Weise ist eine Verknüpfung zu einem älteren Änderungsstand herstellbar. Dabei ergänzen oder überschreiben die Daten des neuen Änderungsstands die Daten des älteren Änderungsstands. Hierdurch ergeben sich weitere Vorteile. Zum einen kann Speicherplatz eingespart werden, da der neue Änderungsstand die unveränderten Daten des verknüpften älteren Änderungsstands nicht selbst enthalten muss sondern nur auf diese referenziert. Zum anderen ist somit auf einfache Weise eine Historie von Änderungsständen herstellbar bzw. nachvollziehbar.

Eine weitere Weiterbildung des Verfahrens sieht vor, dass der Lebenszyklus des Feldgeräts nicht erst mit seiner Herstellung beginnt, sondern bereits vorher, wobei das Feldgerät vor seiner Herstellung als Feldgerättyp vorliegt (d.h. existiert oder besteht) und dann mit Beginn seiner Herstellung, als wenigstens eine Feldgerätstandinstanz vorliegt. Dabei ist ferner vorgesehen, dass jede Feldgerätinstanz von dem Feldgerätstandtyp abgeleitet wird, und dass jeder Feldgerättyp und jede Feldgerätinstanz durch eine jeweilige eigene Entität repräsentiert wird. Ferner wird dann in Schritt d) in dem in Schritt c) erzeugten Änderungsstand einer neu abgeleiteten Feldgerätinstanz zusätzlich zu den Nutzdaten der dritte Hashwert eines Änderungsstands des Feldgerättyps als Zusatzdaten gespeichert. Dabei entspricht die Anzahl der Feldgerätinstanzen der hergestellten Stückzahl. Beispiele für Feldgerättypen und Feldgerätinstanzen werden in der Beschreibung eines Ausführungsbeispiels genannt. Durch das Ableiten von einem Feldgerättyp kann die Feldgerätinstanz die den Feldgerättyp betreffenden Daten übernehmen bzw. erben. Dies geschieht durch die Verknüpfung mit einem Änderungsstand des Feldgerättyps anhand dessen Hashwerts in dem Änderungsstand der Feldgerätinstanz. Auf diese einfache und vorteilhafte Weise, kann mit einem Änderungsstand eines Feldgerättyps eine einheitliche Datengrundlage bereitgestellt werden, und für jede von diesem Feldgerättyp abgeleitete Feldgerätinstanz können die in diesem Änderungsstand des Feldgerättyps enthaltenen Daten vollständig oder teilweise übernommen werden. Dabei ist die teilweise Übernahme von Daten vom Feldgerättyp zur Feldgerätinstanz zum Beispiel dadurch möglich, dass die ausgewählten Daten aus dem Änderungsstand des Feldgerättyps in den Änderungsstand der Feldgerätinstanz kopiert werden.

Außerdem ist es zum Beispiel möglich, dass ein Feldgerättyp mehrere parallele Änderungsstände besitzt, die unterschiedliche aber jeweils aktuelle Datenteilmengen umfassen, wobei jedem Änderungsstand ein anderer Name zugeordnet ist. Dabei kann jeder dieser parallelen Änderungsstände beispielsweise einer Fertigungsvariante mit bestimmten Merkmalen entsprechen. Eine von einem solchen Gegenstandtyp mit mehreren parallelen Änderungsständen abgeleitete Gegenstandinstanz wird zweckmäßiger Weise nur die Daten eines der parallelen Änderungsstände des Feldgerättyps übernehmen bzw. erben, das heißt in einem Änderungsstand dieser Feldgerätinstanz wird zusätzlich zu den Nutzdaten der dritte Hashwert eines der parallelen Änderungsstände des Feldgerättyps als Zusatzdaten gespeichert. Somit ist dies auch ein weiteres Beispiel für eine teilweise Übernahme von Daten vom Feldgerättyp zur Feldgerätinstanz.

Eine Weiterbildung des Verfahrens sieht vor, dass im Schritt d) in dem im Schritt c) erzeugten Änderungsstand einer bestehenden Feldgerätinstanz zusätzlich zu den Nutzdaten der dritte Hashwert eines neuen Änderungsstands des Feldgerättyps als Zusatzdaten gespeichert wird. Auf diese einfache und vorteilhafte Weise kann eine Änderung oder Aktualisierung wie zum Beispiel ein Firmwareupdate als neuer Änderungsstand eines Feldgerättyps bereitgestellt werden und für jede von diesem Feldgerättyp abgeleitete Feldgerätinstanz können bzw. sollten die in diesem neuen Änderungsstand des Feldgerättyps enthaltenen Daten übernommen werden. Dies geschieht durch die Verknüpfung mit dem neuen Änderungsstand des Feldgerättyps anhand dessen Hashwerts in einem neuen Änderungsstand der Feldgerätinstanz.

Eine Weiterbildung des Verfahrens sieht vor, dass in Schritt d) in dem in Schritt c) erzeugten Änderungsstand eines Feldgerättyps zusätzlich zu den Nutzdaten der dritte Hashwert eines Änderungsstands eines anderen Feldgerättyps oder die dritten Hashwerte von Änderungsständen mehrerer anderer Feldgerättypen als Zusatzdaten gespeichert wird bzw. werden. Auf diese einfache und vorteilhafte Weise können auch die Daten komplexer zusammengesetzter bzw. modular aufgebauter Feldgeräte bereitgestellt werden. Beispielsweise kann dann eine von einem solchen zusammengesetzten Feldgerättypen abgeleitete Feldgerätinstanz die Daten aller verknüpften Feldgerättypen übernehmen bzw. erben. Eine von einem solchen zusammengesetzten Feldgerättypen abgeleitete Feldgerätinstanz könnte aber auch nur die Daten von weniger als allen verknüpften Feldgerättypen übernehmen bzw. erben. Somit ist dies ein weiteres Beispiel für eine teilweise Übernahme von Daten vom Feldgerättyp zur Feldgerätinstanz.

Für den Fall, dass spontan und insbesondere einmalig, etwa beim Bau einer Einzelmaschine, eine zusammengesetzte Feldgerätinstanz gebildet werden soll, ohne dass ein entsprechender zusammengesetzter Feldgerättyp existiert, kann in einem Änderungsstand dieser Feldgerätinstanz zusätzlich zu den Nutzdaten der dritte Hashwert eines Änderungsstands einer anderen Feldgerätinstanz oder die dritten Hashwerte von Änderungsständen mehrerer anderer Feldgerätinstanzen als Zusatzdaten gespeichert werden.

Eine Weiterbildung des Verfahrens sieht vor, dass das dezentral verteilte inhaltsadressierte Speichersystem gemäß dem InterPlanetary File System (IPFS) ausgebildet ist.

Eine Weiterbildung des Verfahrens sieht vor, dass eine in das Verfahren involvierte Person ebenfalls durch eine eigene Entität repräsentiert wird. Dabei kann auch eine eine Person repräsentierende Entität anhand einer kryptografischen Identität identifizierbar gemacht werden, indem für sie ein asymmetrisches Schlüsselpaar, umfassend einen öffentlichen und einen privaten Schlüssel, generiert wird. Ferner kann auch der eine Person repräsentierenden Entität eine Adresse, insbesondere eindeutige Adresse, zugeordnet werden. Dabei kann als Adresse der Entität der öffentliche Schlüssel der Entität oder ein erster Hashwert dienen, der mittels einer kryptografischen Hashfunktion basierend auf dem öffentlichen Schlüssel der Entität generiert wird. Somit bietet das entsprechend weitergebildete Verfahren auch eine eindeutige und zuverlässige Identifikation und Benennung von Personen, welche insbesondere Anwender sind, nämlich anhand von öffentlichen kryptografischen Schlüsseln oder Hashwerten. Ferner können dann die eine Person betreffenden Daten im Wesentlichen in gleicher Weise wie die ein Feldgerät betreffen Daten bereitgestellt werden.

Zum Speichern des privaten und/oder öffentlichen Schlüssels des asymmetrischen Schlüsselpaars und/oder der Adresse der eine Person repräsentierenden Entität gibt es verschiedene Möglichkeiten, wobei der erste Hashwert immer aus dem öffentlichen ableitbar ist und daher nicht gespeichert werden muss. Beispielsweise kann das Speichern in einem Speichermodul erfolgen, das sich im Besitz der Person befindet, beispielsweise ein Trusted Platform Module (TPM) oder ein USB-Token. Dabei kann der Lese- und Schreibzugriff auf das Speichermodul zusätzlich mit einer PIN oder einem Passwort gesichert sein. Alternativ kann das Speichern in einem insbesondere unternehmensinternen Authentifizierungssystem wie zum Beispiel Active Directory oder Kerberos erfolgen, wobei zweckmäßiger Weise der Lese- und Schreibzugriff auf das Authentifizierungssystem mit einem Benutzernamen und einem Passwort gesichert ist. Alternativ kann die Speicherung auch durch Ausdrucken der Schlüssel auf beispielsweise ein Blatt Papier als Text, insbesondere in hexadezimaler Darstellung, oder als ein zweidimensionaler Code, insbesondere QR-Code, oder als Uniform Resource Identifier (URI) oder ähnliches erfolgen, das sich im Besitz der Person befindet.

Gemäß einer weiteren Weiterbildung des Verfahrens ist vorgesehen, dass in Schritt g) nach dem Speichern des Änderungsstands und, sofern vorhanden, des dem Änderungsstand zugeordneten Namens und/oder des dritten Hashwerts das Datenobjekt mittels eines zufällig erzeugten symmetrischen Sitzungsschlüssels verschlüsselt wird, so dass das Datenobjekt mit dem darin enthaltenen Änderungsstand und diesem zugeordneten dritten Hashwert und ggf. Namen dann als ein insbesondere vollständig verschlüsseltes Datenobjekt vorliegt.

Diesbezüglich sieht eine weitere Weiterbildung des Verfahrens vor, dass in Schritt g) nach dem Verschlüsseln des Änderungsstands der symmetrische Sitzungsschlüssel mit dem asymmetrischen öffentlichen Schlüssel eines beabsichtigten Empfängers, insbesondere einer als Empfänger vorgesehenen Entität, verschlüsselt wird.

Dies bringt den Vorteil, dass nunmehr auch Vertraulichkeit für die hinsichtlich der Daten eines Feldgeräts bzw. eines Feldgerättyps oder einer Feldgerätinstanz vorgenommenen Änderungen gewährleistet ist.

In einer weiteren Weiterbildung des Verfahrens ist vorgesehen, dass in Schritt g) schließlich ein vierter Hashwert basierend auf dem Datenobjekt mittels einer kryptographischen Hashfunktion generiert wird, wobei der vierte Hashwert als Adresse des Datenobjekts dient. Dies kann für unverschlüsselte wie auch verschlüsselte Datenobjekte erfolgen.

Dank des vierten Hashwerts ist das jeweilige Datenobjekt in dem dezentral verteilten inhaltsadressierten Speichersystem eindeutig adressierbar und aufrufbar. Zum Entschlüsseln eines verschlüsselten Datenobjekts braucht es dann jedoch den passenden symmetrischen Sitzungsschlüssel. Ein beabsichtigter Empfänger kann den passenden symmetrischen Sitzungsschlüssel, welcher mit dem asymmetrischen öffentlichen Schlüssel des beabsichtigten Empfängers verschlüsselt wurde, beispielsweise per E-Mail erhalten haben. Mit seinem asymmetrischen privaten Schlüssel kann der Empfänger den verschlüsselten Sitzungsschlüssel entschlüsseln und anschließend mit dem Sitzungsschlüssel das verschlüsselte Datenobjekt entschlüsseln.

Gemäß einer Weiterbildung des Verfahrens ist vorgesehen, dass zu dem im Schritt g) gespeicherten Änderungsstand eine dauerhafte Mitteilung, insbesondere in Form einer Transaktion, erzeugt und in einem dezentral verteilten auf Blockchain-Technologie basierenden Speichersystem (nachfolgend kurz Blockchain-Speichersystem genannt) gespeichert wird. Dabei ist in dem Blockchain-Speichersystem insbesondere wenigstens ein Datenblock gespeichert, der einen Dateninhalt und einen Hashwert umfasst, wobei der Hashwert mittels einer kryptografischen Hashfunktion basierend auf dem Dateninhalt des Datenblocks generiert wurde und als Adresse des Datenblocks dient. Das Verfahren gemäß dieser Weiterbildung umfasst die folgenden weiteren Schritte:
- i) Erzeugen einer Transaktion,
- j) Speichern des vierten Hashwerts als Teil von Transaktionsdaten in der Transaktion aus Schritt i) und damit Verknüpfen der Transaktion mit dem Datenobjekt aus Schritt h), in welchem der Änderungsstand gespeichert ist,
- k) Erzeugen eines Datenblocks,
- 1) Speichern der Transaktion als Dateninhalt in dem Datenblock aus Schritt k),
- m) Ermitteln eines fünften Hashwertes, welcher der Hashwert des zuletzt in dem Blockchain-Speichersystem gespeicherten Datenblocks ist,
- n) Speichern des fünften Hashwerts als Dateninhalt in dem Datenblock aus Schritt k),
- o) Generieren eines Hashwerts für den Datenblock basierend auf dem Dateninhalt des Datenblocks mittels einer kryptografischen Hashfunktion, wobei der Hashwert als Adresse des Datenblocks dient,
- p) Speichern des im Schritt o) generierten Hashwerts in dem Datenblock, und
- q) Speichern des Datenblocks in dem Blockchain-Speichersystem, in welchem auch die zu früheren Zeitpunkten erstellten Datenblöcke gespeichert sind.

Der Dateninhalt umfasst also die in dem Datenblock gespeicherte Transaktion, insbesondere alle in dem Datenblock gespeicherten Transaktionen, sowie den Hashwert des zuletzt in dem Blockchain-Speichersystem gespeicherten Datenblocks. Durch das Speichern des Hashwerts des zuletzt in dem Blockchain-Speichersystem gespeicherten Datenblocks in im Dateninhalt des neu erzeugten Datenblocks, wird eine Verknüpfung bzw. Verkettung der Datenblöcke erreicht, wobei jeder Datenblock stets mit dem zuvor gespeicherten Datenblock verknüpft bzw. verkettet ist, so dass nach und nach eine Kette von Datenblöcken entsteht, die stetig wächst.

Somit sind auf einfache und vorteilhafte Weise die hinsichtlich der Daten eines Feldgeräts bzw. eines Feldgerättyps oder einer Feldgerätinstanz vorgenommenen Änderungen in unveränderlicher und dauerhafter Weise dokumentiert. Insbesondere wenn in dem Datenblock auch ein Zeitstempel gespeichert wird, ist vorteilhafter Weise auch der Zeitpunkt der vorgenommenen Änderungen in unveränderlicher, dauerhafter und unabstreitbarer Weise dokumentiert.

Wie das erste Speichersystem zur Speicherung der Änderungsstände ist auch das zweite Speichersystem, welches auf Blockchain-Technologie basiert und zur Speicherung der Mitteilungen über gespeicherte Änderungsstände in Form von Transaktionen dient, als dezentral verteiltes Speichersystem ausgebildet und bietet somit ebenfalls die bereits oben erwähnten Vorteile der Flexibilität, Skalierbarkeit (d.h. die Systemkapazität ist einfach anpassbar an die Daten-, Transaktions- und Benutzermenge), Verfügbarkeit und Ausfallsicherheit und ist damit ebenso für ein organisationsübergreifendes PLM geeignet. Dabei stellen das erste und das zweite Speichersystem zwei im Wesentlichen voneinander unabhängige Speichersysteme dar. Das zusätzliche Speichern einer dauerhaften Mitteilung über das Speichern eines Änderungsstandes bringt zudem den Vorteil, dass selbst wenn im ersten Speichersystem für Änderungsstände ein Änderungsstand einmal nicht mehr verfügbar sein sollte, durch die im zweiten Speichersystem gespeicherte Mitteilung immer noch nachweisbar ist, dass es diesen Änderungsstand einmal gegeben hat. Dabei kann das auf Blockchain-Technologie basierende Speichersystem insbesondere durch eine Blockchain-Service-Plattform wie zum Beispiel Ethereum bereitgestellt sein.

In einer weiteren Weiterbildung des Verfahrens ist vorgesehen, dass in Schritt j) der verschlüsselte Sitzungsschlüssel als weiterer Teil der Transaktionsdaten in der Transaktion aus Schritt i) gespeichert wird. Dadurch ist der verschlüsselte Sitzungsschlüssel in dem Blockchain-Speichersystem zwar für jeden interessierten Empfänger aufrufbar, jedoch kann nur ein beabsichtigter Empfänger mit seinem asymmetrischen privaten Schlüssel den verschlüsselten Sitzungsschlüssel wieder entschlüsseln und anschließend mit dem Sitzungsschlüssel den verschlüsselten Änderungsstand entschlüsseln, wobei das Datenobjekt, welches den verschlüsselten Änderungsstand speichert, anhand des zusammen mit dem verschlüsselten Sitzungsschlüssel in der Transaktion gespeicherten vierten Hashwerts in dem dezentral verteilten inhaltsadressierten Speichersystem eindeutig adressierbar und aufrufbar.

Bevorzugt ist bei dem Verfahren vorgesehen auch vorgesehen, dass in Schritt j) zusätzlich eine Signatur als Teil der Transaktionsdaten in der in Schritt i) erzeugten Transaktion gespeichert wird, wobei die Signatur ein den Urheber der Transaktion kennzeichnender Wert, insbesondere numerischer Wert, ist, der basierend auf dem vierten Hashwert und einem asymmetrischen privaten Schlüssel des Urhebers, insbesondere einer als Urheber geltenden Entität, mittels einer asymmetrischen kryptographischen Funktion generiert wird.

Dieses Signieren bringt viele weitere Vorteile mit sich. Durch Speicherung der Signaturen in Transaktionen können diese Signaturen dezentral überprüft werden. Ein derart angepasstes Verfahren bietet auch eine Zurechenbarkeit, Verbindlichkeit und Nichtabstreitbarkeit für die hinsichtlich der Daten eines Feldgeräts bzw. eines Feldgerättyps oder einer Feldgerätinstanz vorgenommenen Änderungen, welche in einem Änderungsstand gespeichert sind, und steigert somit zudem die Integrität und Authentizität. Dies ist auch hinsichtlich der Auditierbarkeit, also der Nachweisbarkeit einer dritten Partei gegenüber, von großem Vorteil, da für jeden signierten Änderungsstand der Urheber nachgewiesen werden kann.

Durch eine Transaktion, die eine Signatur aufweist und auf einen bestimmten Änderungsstand verweist, ist beispielsweise auch eine Freigabe dieses Änderungsstands zuverlässig darstellbar. Dabei kann der Empfänger entscheiden, ob er dem anhand der Signatur überprüfbaren Urheber die Befugnis zur Freigabe von Änderungsständen zuerkennt.

Sofern vorgesehen ist, dass eine Transaktion ohne Signatur grundsätzlich nicht speicherbar ist, ist beispielsweise auch eine dezentral überprüfbare Schreibberechtigung zuverlässig darstellbar.

Es kann zweckmäßiger Weise bei dem Verfahren ferner vorgesehen sein, Transaktionen des Blockchain-Speichersystems auch für andere Zwecke zu erzeugen und zu speichern. Beispielsweise können in einer Transaktion die Adresse (insbesondere der erste Hashwert) einer Entität und die Adresse (der dritter Hashwert) eines Änderungsstands als Transaktionsdaten gespeichert werden, um eine Entität und einen Änderungsstand einander zuzuordnen. Alternativ oder ergänzend zur Adresse des Änderungsstands kann auch die Adresse (der vierte Hashwert) des den Änderungsstand enthaltenen Datenobjekts als Teil der Transaktionsdaten in der Transaktion gespeichert werden. Es könnte auch der dem Änderungsstand gegebenenfalls zugeordnete Name als Teil der Transaktionsdaten in der Transaktion gespeichert werden. Damit sind einer Entität beliebig viele Änderungsstände zuordenbar und einem Änderungsstand beliebig viele Entitäten zuordenbar. Um nicht für jede Entität-Änderungsstand-Zuordnung eine eigene Transaktion erzeugen und speichern zu müssen, können in einer Transaktion auch mehrere Adressen von Entitäten zusammen mit einer Adresse eines Änderungsstandes oder mehrere Adressen von Änderungsständen zusammen mit einer Adresse einer Entität gespeichert werden.

Eine andere Weiterbildung des Verfahrens sieht vor, dass die Verfahrensschritte a) bis g) oder a) bis q) von einer Feldgerätinstanz durchgeführt werden. Hierauf wird später im Zusammenhang mit dem erfindungsgemäßen System noch näher eingegangen.

Ferner sieht eine Weiterbildung des Verfahrens sieht vor, dass bedarfsweise oder ereignisabhängig die Verfahrensschritte a) bis g) oder a) bis q) wiederholt ausgeführt werden. Vorteilhafter Weise können die jeweiligen Verfahrensschritte zum Beispiel immer dann ausgeführt werden, wenn es hinsichtlich der Daten eines Feldgeräts bzw. eines Feldgerättyps oder einer Feldgerätinstanz Neuerungen oder Änderungen gibt, das heißt auch mehrmals je Feldgerättyp oder Feldgerätinstanz.

Des Weiteren wird auch ein System vorgeschlagen, das zum Durchführen des erfindungsgemäßen Verfahrens, insbesondere einschließlich wenigstens einer seiner optionalen Weiterbildungen, zum sicheren Bereitstellen von Daten eines Feldgeräts über dessen gesamten Lebenszyklus ausgebildet ist. Dabei umfasst das System ein Kommunikationsnetz mit wenigstens zwei Teilnehmerknoten, welche jeweils eine Speichereinrichtung und eine Verarbeitungseinrichtung sowie eine Kommunikationseinrichtung zum Ankoppeln an und kommunizieren über das Kommunikationsnetz aufweisen. Dabei sind die Daten eines Feldgeräts in der Speichereinrichtung speicherbar und über die Kommunikationseinrichtung wenigstens einem weiteren Teilnehmerknoten im Kommunikationsnetz bereitstellbar. Ferner ist in der Speichereinrichtung ein maschinenausführbarer Programmcode gespeichert, der bei Ausführung durch die Verarbeitungseinrichtung das Bereitstellen der Daten eines Feldgeräts entsprechend dem Verfahren nach einem der vorherigen Ansprüche bewirkt. Außerdem ist das System selbst als dezentral verteiltes inhaltsadressiertes Speichersystem ausgebildet oder es ist Teil eines übergeordneten Systems, das als dezentral verteiltes inhaltsadressiertes Speichersystem ausgebildet ist oder es steht mit einem dezentral verteilten inhaltsadressierten Speichersystem in Verbindung, zum Beispiel über einen der Teilnehmerknoten. Zusätzlich kann das System selbst als dezentral verteiltes auf Blockchain-Technologie basierendes Speichersystem (Blockchain-Speichersystem) ausgebildet sein oder Teil eines übergeordneten Systems sein, das als Blockchain-Speichersystem ausgebildet ist, oder mit einem Blockchain-Speichersystem in Verbindung stehen, zum Beispiel über einen der Teilnehmerknoten.

Die zuvor für das Verfahren und dessen optionalen Weiterbildungen beschriebenen Merkmale und Vorteile gelten analog ebenso für das vorgeschlagene System.

Wenn es sich bei einem Feldgerät bzw. einer Feldgerätinstanz beispielsweise um ein Gerät oder eine Maschine handelt und diese Gegenstandinstanz über eine Speichereinrichtung, eine Verarbeitungs- bzw. Recheneinrichtung sowie eine Kommunikationseinrichtung verfügt, kann sie ausgebildet sein, die Schritte des erfindungsgemäßen Verfahrens selbstständig bzw. automatisch auszuführen. Das heißt eine solche Feldgerätinstanz kann Daten, insbesondere sie betreffende Daten, erfindungsgemäß sicher bereitstellen. Dabei kann die Feldgerätinstanz selbst als ein Teilnehmerknoten im Kommunikationsnetz des erfindungsgemäßen Systems ausgebildet sein oder, insbesondere aus Gründen zu geringer eigener Rechen- und/oder Speicherkapazität, mit einem Teilnehmerknoten in Kommunikationsverbindung stehen. Wichtig ist dabei, dass die die Feldgerätinstanz repräsentierende Entität, insbesondere der private Schlüssel des asymmetrischen Schlüsselpaars der Entität, bei der Feldgerätinstanz verbleibt, so dass die Feldgerätinstanz die bereitgestellten Daten wie beispielsweise ein geänderter Status oder eine geänderte Netzwerkadresse, signieren kann.

Diese und weitere Merkmale sowie die vielen Vorteile der vorliegenden Erfindung ergeben sich auch aus den nachfolgend unter Bezugnahme auf die beiliegenden Zeichnungen näher erläuterten Ausführungsbeispielen. Es zeigen dabei
- Figur 1a: eine schematische Darstellung einer beispielhaften Ausbildung des Verfahrens von Schritt a) bis h) in Form eines einfachen Ablaufdiagramms;
- Figur 1b: eine schematische Darstellung einer beispielhaften Ausbildung des Verfahrens von Schritt i) bis q) in Form eines einfachen Ablaufdiagramms;
- Figur 2: eine schematische Darstellung einer beispielhaften Ausbildung des Systems;
- Figur 3: in schematischer Darstellung vier grundlegende Voraussetzungen für das Funktionieren des erfindungsgemäßen Verfahrens;
- Figur 4: in schematischer Darstellung das zu den grundlegenden Voraussetzungen zählende Identitätsmodell;
- Figur 5: in schematischer Darstellung das zu den grundlegenden Voraussetzungen zählende Inhaltsmodell;
- Figur 6: in schematischer Darstellung das zu den grundlegenden Voraussetzungen zählende Verteilungsmodell hinsichtlich einer Schreibberechtigung;
- Figur 7: in schematischer Darstellung das zu den grundlegenden Voraussetzungen zählende Verteilungsmodell hinsichtlich einer Leseberechtigung;
- Figur 8: in schematischer Darstellung das zu den grundlegenden Voraussetzungen zählende Interaktionsmodell;
- Figur 9: in schematischer Darstellung den Ablauf einer Publikationsableitung;
- Figur 10: in schematischer Darstellung den Ablauf eines Änderungsvorschlags mit anschließender Änderungsübernahme.

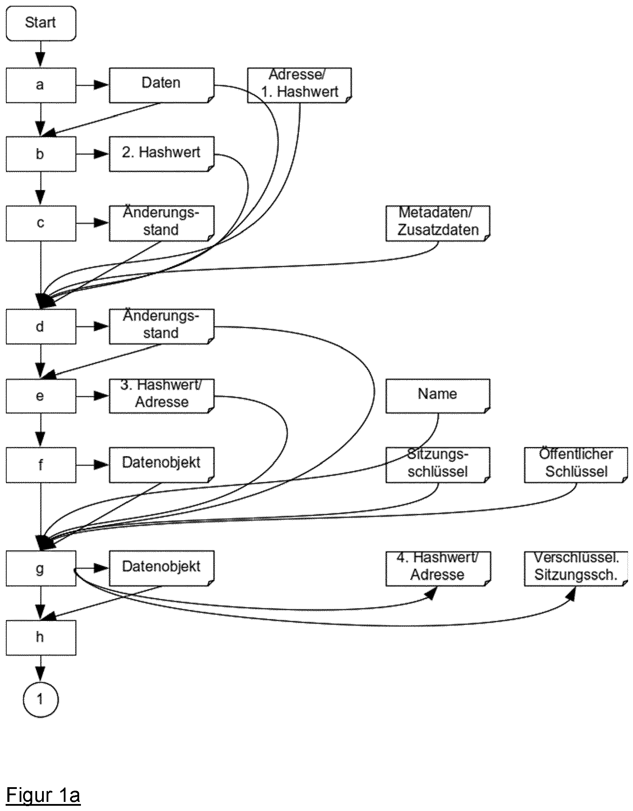

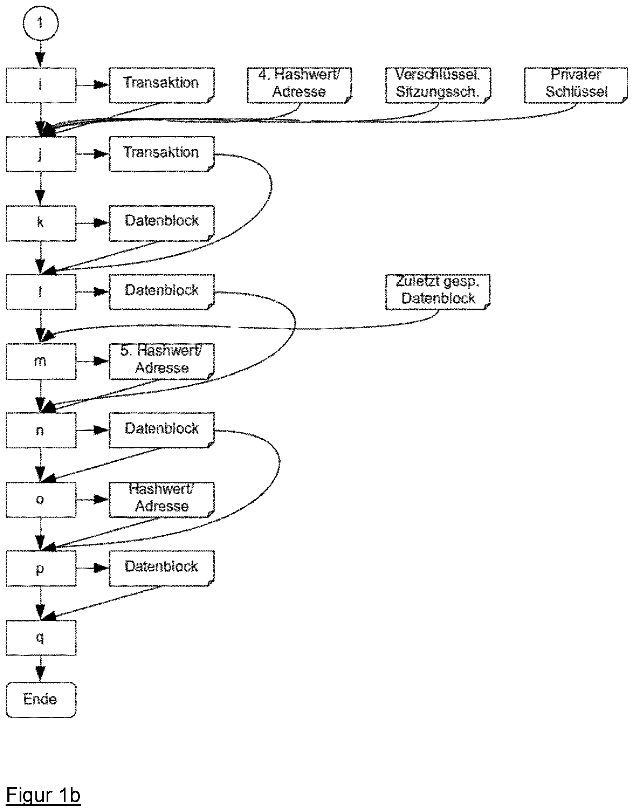

In den Figur 1a und 1b sind die Verfahrensschritte a) bis q) einer beispielhaften Ausbildung des Verfahrens zum sicheren Bereitstellen von Daten eines Gegenstands über dessen gesamten Lebenszyklus dargestellt, welche nacheinander ausgeführt werden. Dabei bildet das als eine "1" in einem Kreis dargestellte Konnektorsymbol die Verbindung zwischen dem Verfahrensschritt h) in Figur 1a und dem Verfahrensschritt i) in Figur 1b.

Es wird dabei davon ausgegangen, dass der Lebenszyklus des Gegenstands nicht erst mit seiner Herstellung beginnt, sondern bereits vorher, wobei der Gegenstand vor seiner Herstellung als Gegenstandtyp vorliegt und dann mit Beginn seiner Herstellung, als wenigstens eine Gegenstandinstanz vorliegt, wobei jede Gegenstandinstanz von dem Gegenstandtyp abgeleitet wird, und wobei jeder Gegenstandtyp und jede Gegenstandinstanz durch eine jeweilige eigene Entität repräsentiert wird. Dabei entspricht die Anzahl der Gegenstandinstanzen dann der hergestellten Stückzahl. Durch das Ableiten von einem Gegenstandtyp kann die Gegenstandinstanz zumindest einen Teil der den Gegenstandtyp betreffenden Daten übernehmen bzw. erben.

Das Verfahren wird nun für eine neu hergestellte Gegenstandinstanz näher betrachtet.

Bevor jedoch mit dem Verfahrensschritt a) begonnen werden kann, muss zunächst eine die Gegenstandinstanz repräsentierende Entität erzeugt werden, die anhand einer kryptografischen Identität identifizierbar gemacht wird, indem ein asymmetrisches Schlüsselpaar, umfassend einen öffentlichen und einen privaten Schlüssel, generiert wird, und die beispielsweise anhand eines ersten Hashwerts adressierbar gemacht wird, der mittels einer kryptographischen Hashfunktion basierend auf dem öffentlichen Schlüssel der Entität generiert wird. Dabei umfasst das Verfahren die folgenden weiteren Schritte:
Im Schritt a) werden Daten erzeugt, die die Gegenstandinstanz betreffen und bereitgestellt werden sollen. Dies können sämtliche Daten sein, die zum Beispiel Merkmale der Gegenstandinstanz spezifizieren bzw. Eigenschaften und/oder Funktionen der Gegenstandinstanz beschreiben. Jedenfalls sind diese Daten dann in Dateien und Ordnern hierarchisch strukturiert.

Im Schritt b) wird ein zweiter Hashwert generiert basierend auf den Daten aus Schritt a) mittels einer kryptographischen Hashfunktion. Dazu wird beginnend an der untersten Hierarchieebene bis zur obersten Hierarchieebene sukzessive je nach Anzahl vorhandener Dateien und/oder Ordner mindestens ein Dateihashwert und/oder Ordnerhashwert generiert wird. Dabei wird für jede Datei ein Dateihashwert generiert basierend auf deren Dateiinhalt mittels einer kryptographischen Hashfunktion. Ferner wird für jeden nur eine Anzahl von Dateien enthaltenen Ordner ein Ordnerhashwert generiert basierend auf den Dateinamen und Dateihashwerten der im Ordner enthaltenen Dateien mittels einer kryptographischen Hashfunktion. Ferner wird für jeden nur eine Anzahl von Ordnern enthaltenen Ordner ein Ordnerhashwert generiert basierend auf den Ordnernamen und Ordnerhashwerten der im Ordner enthaltenen Ordner mittels einer kryptographischen Hashfunktion. Ferner wird für jeden eine Anzahl von Ordnern und eine Anzahl von Dateien enthaltenen Ordner ein Ordnerhashwert generiert basierend auf den Ordnernamen und Ordnerhashwerten der im Ordner enthaltenen Ordner sowie basierend auf den Dateinamen und Dateihashwerten der im Ordner enthaltenen Dateien mittels einer kryptographischen Hashfunktion. Bis schließlich der zweite Hashwert generiert wird basierend auf den Ordnernamen und Ordnerhashwerten der auf der obersten Hierarchieebene vorhandenen Ordner und/oder basierend auf den Dateinamen und Dateihashwerten der auf der obersten Hierarchieebene vorhandenen Dateien.

Im Schritt c) wird ein neuer Änderungsstand erzeugt.

Im Schritt d) werden die Im Schritt a) erzeugten Daten und der Im Schritt b) generierte zweite Hashwert als Nutzdaten in dem Im Schritt c) erzeugten Änderungsstand gespeichert. Außerdem wird in diesem Beispiel zusätzlich die Adresse der Entität als Zusatzdaten in dem Änderungsstand aus Schritt c) gespeichert, zur Verknüpfung des neuen Änderungsstands mit der Entität. Somit werden der Änderungsstand und sein Inhalt der Entität zugeordnet. Ferner wird in dem Änderungsstand aus Schritt c) zusätzlich zu den Nutzdaten der dritte Hashwert eines Änderungsstands des Gegenstandtyps gespeichert (in Figur 1a nicht gezeigt) und somit eine Verknüpfung zu diesem Änderungsstand hergestellt. Die Daten des neuen Änderungsstands der Gegenstandinstanz ergänzen oder überschreiben dann gegebenenfalls die Daten des verknüpften älteren Änderungsstands des Gegenstandtyps. Ferner werden in dem Änderungsstand aus Schritt c) zusätzlich zu den Nutzdaten ein Änderungsautor, ein Änderungsdatum, eine Änderungszeit, ein Änderungsbeschreibungstext und ein Datenvolumenwert, insbesondere als Metadaten des Änderungsstands, gespeichert, wobei die Metadaten ebenfalls Zusatzdaten sind.

Im Schritt e) wird ein dritter Hashwert generiert basierend auf dem Änderungsstand mittels einer kryptographischen Hashfunktion. Dabei werden sowohl die Nutzdaten als auch die Zusatzdaten, die im Änderungsstand gespeichert sind, berücksichtigt. Der dritte Hashwert dient dann als Adresse des Änderungsstands.

In Schritt f) wird ein neues Datenobjekt erzeugt, das vorgesehen ist zur Speicherung in einem dezentral verteilten inhaltsadressierten Speichersystem, welches gemäß dem InterPlanetary File System (IPFS) ausgebildet sein kann.

Im Schritt g) wird für den Änderungsstand ein Name erzeugt und dem Änderungsstand zugeordnet. Der Name kann zum Beispiel eine Bezeichnung oder eine Versionsnummer sein, welche insbesondere für den Anwender einfach verständlich ist. Dabei kann das Zuordnen beispielsweise durch Verknüpfen des Namens mit dem als Adresse des Änderungsstands dienenden dritten Hashwert erfolgen. Dann werden der Änderungsstand, der dritte Hashwert und der Name in dem Datenobjekt aus Schritt f) gespeichert. Anschließend wird das Datenobjekt, welches den Änderungsstand, den dritten Hashwert und den dem Änderungsstand zugeordneten Namen enthält, mittels eines zufällig erzeugten symmetrischen Sitzungsschlüssels verschlüsselt. Nach dem Verschlüsseln des Datenobjekts wird der symmetrische Sitzungsschlüssels mit dem asymmetrischen öffentlichen Schlüssel eines beabsichtigten Empfängers verschlüsselt. Es wird ferner ein vierter Hashwert basierend auf dem Datenobjekt mittels einer kryptographischen Hashfunktion generiert, wobei der vierte Hashwert als Adresse des Datenobjekts dient.

Im Schritt h) schließlich wird das Datenobjekt in dem dezentral verteilten inhaltsadressierten Speichersystem gespeichert.

Außerdem soll zu dem in Schritt g) gespeicherten Änderungsstand eine dauerhafte Mitteilung in Form einer Transaktion erzeugt und in einem dezentral verteilten auf Blockchain-Technologie basierenden Speichersystem (Blockchain-Speichersystem) gespeichert werden. In dem Blockchain-Speichersystem ist bereits wenigstens ein Datenblock gespeichert, der einen Dateninhalt und einen Hashwert umfasst, wobei der Hashwert mittels einer kryptografischen Hashfunktion basierend auf dem Dateninhalt des Datenblocks generiert wurde und als Adresse des Datenblocks dient. Sollte in dem Blockchain-Speichersystem tatsächlich erst ein Datenblock gespeichert sein, so ist dies sogenannte Genesisblock, der den ersten Datenblock der Blockkette darstellt und sich als einziger Datenblock nicht auf einen vorhergehenden Datenblock bezieht. Es können aber auch bereits weitere Datenblöcke im Blockchain-Speichersystem gespeichert sein. Es sind also folgende weitere Schritte vorgesehen:
Im Schritt i) wird eine neue Transaktion erzeugt, die als dauerhafte Mitteilung über das im Schritt g) durchgeführte Speichern des Änderungsstands fungieren soll.

Im Schritt j) wird der vierte Hashwert als Teil von Transaktionsdaten in der Transaktion aus Schritt i) gespeichert und damit die neue Transaktion mit dem Datenobjekt aus Schritt h), in welchem der Änderungsstand gespeichert ist, verknüpft. Ferner wird auch ein aktueller Zeitstempel erzeugt und als Teil der Transaktionsdaten in der Transaktion gespeichert (in Figur 1b nicht gezeigt). Außerdem wir der verschlüsselte Sitzungsschlüssel aus Schritt g) als weiterer Teil der Transaktionsdaten in der Transaktion aus Schritt i) gespeichert. Zusätzlich wird eine Signatur (in Figur 1b nicht gezeigt) als Teil der Transaktionsdaten in der Transaktion gespeichert, wobei die Signatur ein den Urheber der Transaktion kennzeichnender numerischer Wert ist, der basierend auf dem vierten Hashwert und einem asymmetrischen privaten Schlüssel des Urhebers mittels einer asymmetrischen kryptographischen Funktion generiert wird. In einem anderen, nicht dargestellten Beispiel können zusätzlich weitere Teile der Transaktionsdaten beim Generieren der Signatur berücksichtigt werden.

Im Schritt k) wird dann ein Datenblock entsprechend der Blockchain-Technologie erzeugt.

Im Schritt l) wird die Transaktion in dem Datenblock gespeichert.

Im Schritt m) wird ein fünfter Hashwert ermittelt, wobei dies der Hashwert des zuletzt in dem Blockchain-Speichersystem gespeicherten Datenblocks ist.

Im Schritt n) wird der fünfte Hashwert als weiterer Dateninhalt in dem Datenblock aus Schritt k) gespeichert.

Im Schritt o) wird ein Hashwert für den Datenblock generiert und zwar basierend auf dem Dateninhalt des Datenblocks mittels einer kryptografischen Hashfunktion, wobei der Hashwert als Adresse des Datenblocks dient.

Im Schritt p) wird der im Schritt o) generierte Hashwert in dem Datenblock gespeichert.

Im Schritt q) wird der Datenblock in dem Blockchain-Speichersystem gespeichert, in dem auch die zu früheren Zeitpunkten erstellten Datenblöcke gespeichert sind. Damit ist das Speichern des Änderungsstands in der Blockchain bzw. dem Blockchain-Speichersystem dokumentiert.

Bei einer weiteren in den Figuren 1a und 1b nicht dargestellten beispielhaften Durchführung des Verfahrens, die hinsichtlich eines Gegenstandtyps erfolgt, kann im Schritt d) in dem neuen Änderungsstand eines Gegenstandtyps zusätzlich zu den Nutzdaten der dritte Hashwert eines Änderungsstands eines anderen Gegenstandtyps oder können die dritten Hashwerte von Änderungsständen mehrerer anderer Gegenstandtypen als Zusatzdaten gespeichert und somit Verknüpfungen zu diesen Änderungsständen hergestellt werden. Dies wäre dann der Fall, wenn der Gegenstandtyp ein aus mehreren Gegenstandtypen zusammengesetzter bzw. modular aufgebauter Gegenstandtyp ist.

In einer weiteren in den Figuren 1a und 1b nicht dargestellten beispielhaften Durchführung des Verfahrens, die hinsichtlich einer Gegenstandinstanz erfolgt, kann im Schritt d) in dem neuen Änderungsstand einer bereits bestehenden Gegenstandinstanz zusätzlich zu den Nutzdaten der dritte Hashwert eines älteren Änderungsstands der Gegenstandinstanz als Zusatzdaten gespeichert und somit eine Verknüpfung zu dem älteren Änderungsstand hergestellt werden. Die Daten des neuen Änderungsstands ergänzen oder überschreiben dann gegebenenfalls die Daten des verknüpften älteren Änderungsstands.

In einer weiteren in den Figuren 1a und 1b nicht dargestellten beispielhaften Durchführung des Verfahrens, die hinsichtlich einer Gegenstandinstanz erfolgt, kann im Schritt d) in dem neuen Änderungsstand einer bestehenden Gegenstandinstanz zusätzlich zu den Nutzdaten der dritte Hashwert eines neuen Änderungsstands des Gegenstandtyps als Zusatzdaten gespeichert und somit eine Verknüpfung zu dem neuen Änderungsstand des Gegenstandtyps hergestellt werden. Dies wäre dann der Fall, wenn eine Änderung oder Aktualisierung wie zum Beispiel ein Firmwareupdate als neuer Änderungsstand eines Gegenstandtyps bereitgestellt wurde, die für die von dem Gegenstandtyp abgeleitete Gegenstandinstanz übernommen werden soll.

Ein Empfänger, der aufgrund einer dauerhaften Mitteilung im Blockchain-Speichersystem die Daten des referenzierten Änderungsstands lesen und ggf. weiterverarbeiten möchte, führt die Verfahrensschritte im Wesentlichen lediglich in umgekehrter Reihenfolge aus. Der Empfänger liest also zunächst die Transaktionsdaten aus der als dauerhafte Mitteilung dienenden Transaktion innerhalb des Blockchain-Speichersystems. Somit erhält er den vierten Hashwert, der das den Änderungsstand enthaltene Datenobjekt adressiert, den Zeitstempel der Speicherung der Transaktion, den mit seinem asymmetrischen öffentlichen Schlüssel verschlüsselten Sitzungsschlüssel und die Signatur des Urhebers bzw. Verlegers der Transaktion. Den Sitzungsschlüssel kann der Empfänger mit seinem asymmetrischen privaten Schlüssel entschlüsseln. Anhand des vierten Hashwerts ruft der Empfänger in dem dezentral verteilten inhaltsadressierten Speichersystem das entsprechende Datenobjekt auf und findet darin den mit dem symmetrischen Sitzungsschlüssel verschlüsselten Änderungsstand nebst zugeordnetem Namen und dritten Hashwert, welche er mit dem zuvor entschlüsselten Sitzungsschlüssel entschlüsseln und anschließend lesen kann.

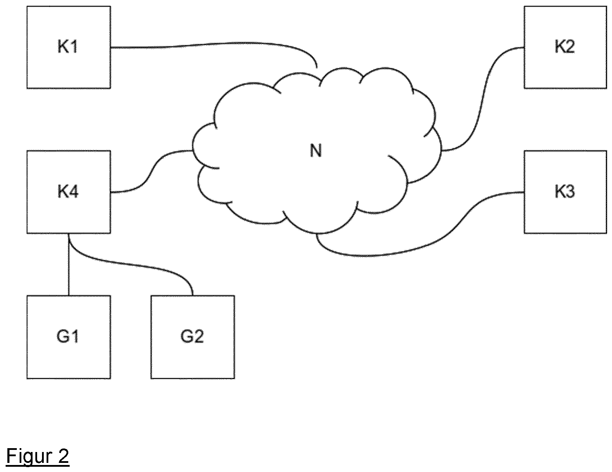

In Figur 2 ist eine beispielhafte Ausbildung des Systems zum Durchführen des Verfahrens zum sicheren Bereitstellen von Daten eines Gegenstands über dessen gesamten Lebenszyklus dargestellt. Es umfasst ein Kommunikationsnetz N und vier Teilnehmerknoten K1, ... , K4, wobei jeder Teilnehmerknoten jeweils eine Speichereinrichtung und eine Verarbeitungseinrichtung sowie eine Kommunikationseinrichtung zum Ankoppeln an und kommunizieren über das Kommunikationsnetz aufweist, welche in Figur 2 aber nicht dargestellt sind.

Das beispielhafte System ist zum einen als dezentral verteiltes inhaltsadressiertes Speichersystem ausgebildet, wobei jeder der gezeigten Teilnehmerknoten in seiner Speichereinrichtung einen Gegenstand betreffende Daten speichern und diese über seine Kommunikationseinrichtung und das Kommunikationsnetz den anderen Teilnehmerknoten nach insbesondere nach dem Peer-to-Peer-Prinzip bereitstellen kann. Zum anderen steht das System über sein Kommunikationsnetz mit einem weiteren Speichersystem (in Figur 2 nicht näher dargestellt) in Verbindung, welches zur Speicherung der Mitteilungen über gespeicherte Änderungsstände in Form von Transaktionen dient, und welches auf Blockchain-Technologie basiert und ebenfalls dezentral verteilt ausgebildet ist (Blockchain-Speichersystem).

Ferner ist in der Speichereinrichtung jedes Teilnehmerknotens ein maschinenausführbarer Programmcode gespeichert, der bei Ausführung durch die Verarbeitungseinrichtung des jeweiligen Teilnehmerknotens das Bereitstellen der einen Gegenstand betreffenden Daten entsprechend dem erfindungsgemäßen Verfahren bewirkt.

Bei den Teilnehmerknoten K1, K2 und K3 handelt es sich um Gegenstandinstanzen. Der Teilnehmerknoten K4 ist keine Gegenstandsinstanz, stellt aber seine Ressourcen, insbesondere Rechen-, Speicher- und Kommunikationsressourcen den Gegenstandinstanzen G1 und G2 zur Verfügung, die aus Gründen zu geringer eigener Rechen- und/oder Speicherkapazität mit dem Teilnehmerknoten K4 in Kommunikationsverbindung stehen.

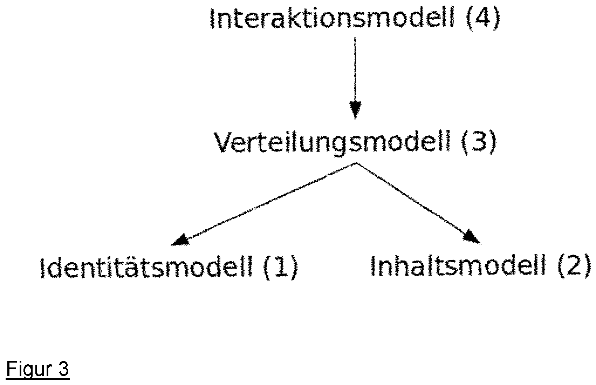

Zum besseren Verständnis werden im Folgenden wesentliche der Erfindung zugrundeliegende Aspekte bzw. Erkenntnisse anhand der Figuren 3 bis 11 näher erläutert.

In Figur 3 sind vier grundlegende Voraussetzungen für das Funktionieren des erfindungsgemäßen Verfahrens dargestellt. Demnach bedarf es zunächst eines Identitätsmodells 1 und eines Inhaltsmodells 2, auf denen ein Verteilungsmodell 3 basiert, auf welchem wiederum ein Interaktionsmodell 4 basiert.

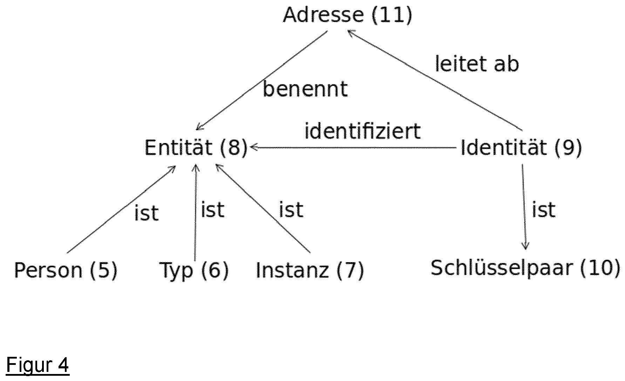

In Figur 4 ist das zu den grundlegenden Voraussetzungen zählende Identitätsmodell dargestellt. Demnach gibt es Personen 5, (Gegenstand-)Typen 6 und (Gegenstand-)Instanzen 7, die alle Entitäten 8 sind bzw. von Entitäten 8 repräsentiert werden, welche mit Daten versehen sein können. Personen, Typen und/oder Instanzen können als Akteure die beschreibenden Daten von Personen, Typen und/oder Instanzen verändern. Alle Entitäten sind dabei durch eine kryptographische Identität 9 identifiziert. Die kryptographische Identität ist im vorgeschlagenen Verfahren ein asymmetrisches, kryptographisches Schlüsselpaar 10, das aus einem öffentlich bekannten und einem privaten Schlüssel besteht. Aus dem öffentlich bekannten Schlüssel wird mittels kryptographischer Einwegfunktion (Hashfunktion) eine Adresse 11 abgeleitet, mit der die Identität benannt bzw. adressiert werden kann.

Als Ergebnis eines Entwicklungsprozesses erzeugt beispielsweise der Hersteller eines Produkts (zum Beispiel Netzteil) oder zusammengesetzten Produkts (zum Beispiel Schaltschrank) einen Typen. Der Typ stellt die Produktionsvorschrift in digitaler Form dar. Als Ergebnis eines Produktionsprozesses erzeugt beispielsweise der Hersteller des Produkts (zum Beispiel Netzteil) oder zusammengesetzten Produkts (zum Beispiel Schaltschrank) eine Instanz auf Basis eines Typen. Die Instanz stellt das physische Objekt in digitaler Form dar.

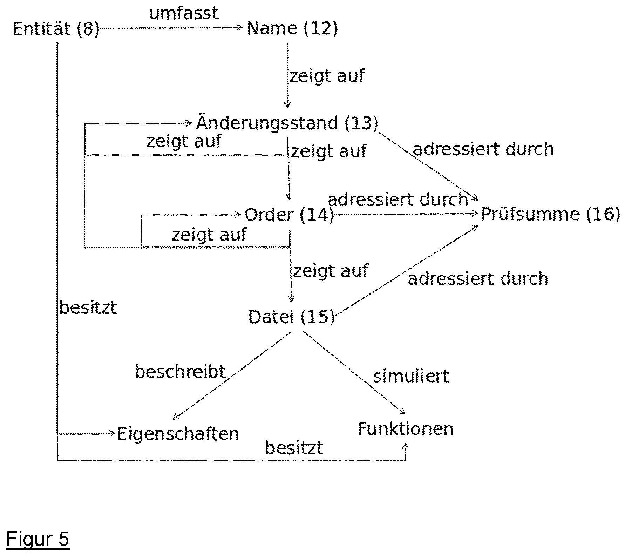

In Figur 5 ist das zu den grundlegenden Voraussetzungen zählende Inhaltsmodell dargestellt. Die eine Person oder einen Gegenstand bzw. einen Gegenstandtyp oder eine Gegenstandinstanz betreffenden Daten sind in Dateien 15, Ordnern 14 und Änderungsständen 13 strukturiert bzw. organisiert, welche über Namen 12 aufrufbar und mit der Entität verknüpft sind. Anders angedrückt umfasst eine Entität 8 eine endliche Liste von Namen 12, wobei jeder Name auf jeweils einen Änderungsstand 13 der Entität zeigt.

Im Falle eines Typs können beispielsweise fortlaufende Nummern, Versionsnummern, Reifegradbezeichnungen oder Projektmeilensteine als Namen fungieren. Im Falle einer Instanz können beispielsweise Fertigungsschritte, Revisionszyklen oder die Bezeichnung von Servicevorgängen als Namen fungieren.

Ein Änderungsstand enthält mindestens einen Autor, ein Änderungsdatum sowie einen Änderungstext (in Figur 5 nicht dargestellt). Weiterhin zeigt ein Änderungsstand auf eine hierarchische Struktur von Ordnern 14 und Dateien 15, in denen die Daten enthalten bzw. organisiert sind. Dateien, Ordner und Änderungsstände sind durch kryptographische Prüfsummen (Hashwerte) adressierbar, welche mittels kryptographischer Hashfunktionen aus dem Inhalt der Daten gebildet werden und eindeutige und unveränderliche Primärschlüssel darstellen (in Figur 5 nicht dargestellt).

Die Daten beschreiben die Eigenschaften und Funktionen, welche eine Entität besitzt, wobei Eigenschaften und Funktionen beispielsweise technischer oder kaufmännischer Natur sein können.

Ferner kann jeder Änderungsstand auf einen oder mehrere vorhergehende Änderungsstände verweisen. Somit ist eine Historie der Daten der Entität abgebildet.

Beispiele für spezifizierende Daten eines Typs sind Klassifizierungsdaten, Zeichnungen, Schaltpläne, Datenblätter, Anleitungen, Produktfotos und beschreibende Produkttexte. Im Fall von zusammengesetzten Produkten können Typen Verweise auf die Änderungsstände anderer Typen enthalten.

Beispiele für spezifizierende Daten einer Instanz sind Seriennummern, Prüfprotokolle, Parameter, Programme, Zustandsdaten, Einbauort und -historie. Im Fall von zusammengesetzten Produkten können Instanzen Verweise auf die Änderungsstände anderer Instanzen enthalten. Instanzen enthalten weiterhin Verweise auf Änderungsstände des Typen, anhand dessen die Instanz erzeugt wurde.

Die folgende Tabelle zeigt Beispiele, wie durch einen Prozess aus einem Typ eine Instanz abgeleitet wird.

| **Typ** | **Prozess** | **Instanz** |
|---|---|---|
| PHOENIX CONTACT | Produktion | Gerät mit Seriennummer 21751T0352 |
| Artikel 2904600 Stromversorgung - QUINT4-PS/1AC/24DC/5 | | |
| Konfigurierbarer Artikel Verteilerblock PHOENIX CONTACT PT-FIX | Konfiguration | Konfigurierter Artikel mit Artikelnummer 9876543 |
| Software-Quellcode für Steuerungsfirmware | Kompilieren / Linken | Software-Obj ektcode (ausführbare Datei, zum Beispiel "BIN", "EXE", "OBJ") |
| Betriebsmittel-Entwurf | Aufbau / Montage | Aufgebautes Betriebsmittel Maschine BM-12345 |
| (beschreibende Daten umfassen zum Beispiel Schaltplan, Zeichnungen, Anleitungen, Programme) | | |

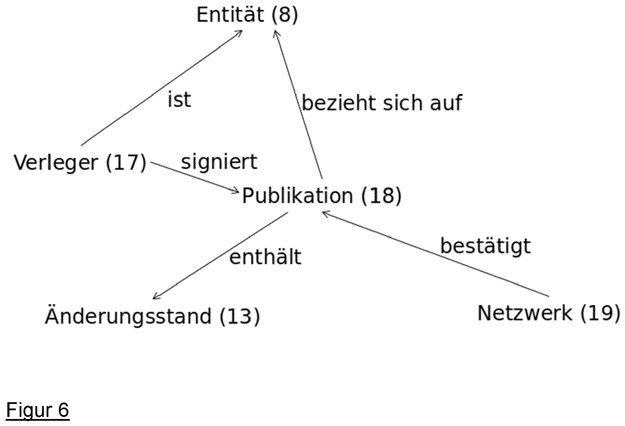

In Figur 6 ist das zu den grundlegenden Voraussetzungen zählende Verteilungsmodell hinsichtlich einer Schreibberechtigung dargestellt. Dabei tauschen Entitäten zu bestimmten Zeitpunkten im Lebenszyklus einer Entität Daten aus. Die Entität, die neue oder geänderte Daten bereitstellen möchte, ist als Verleger 17 (Publisher) bezeichnet. Die Publikation 18 bezieht sich auf die gleiche oder eine andere Entität (zum Beispiel Typ/ Instanz) und enthält den Änderungsstand 13, der übertragen bzw. bereitgestellt werden soll. Wobei hier als Publikation das Datenobjekt bezeichnet ist, welches in einem dezentral verteilten inhaltsadressierten Speichersystem gespeichert bzw. bereitgestellt wird.

Der Verleger gibt die Publikation frei, indem er diese mit dem privaten Schlüssel seiner Identität digital signiert und an ein dezentrales Netzwerk 19 übermittelt, wobei genau genommen lediglich ein basierend auf dem Datenobjekt generierter Hashwert signiert und übermittelt wird. Das dezentrale Netzwerk, welches als ein auf Blockchain-Technologie basierendes dezentral verteiltes Speichersystem ausgebildet ist (Blockchain-Speichersystem), zeichnet sich durch vermaschte Kommunikationsteilnehmer (Teilnehmerknoten) und Strukturlosigkeit aus. Es bedarf beispielsweise keiner Stern-, Ring- oder anderweitig definierten Struktur, um ein solches Netzwerk zu betreiben. Das Netzwerk bestätigt die Publikation, wenn die digitale Signatur gültig ist und stellt die referenzierten Informationen innerhalb des Netzwerks zur Verfügung.

Das Netzwerk stellt dabei sicher, dass die Transaktion nicht zurückgenommen oder deren Inhalt verändert werden kann. Die Nutzung einer digitalen Signatur definiert zudem die Schreibberechtigung des Verteilungsmodells, da vorgesehen ist, dass eine Transaktion ohne Signatur grundsätzlich nicht speicherbar ist.

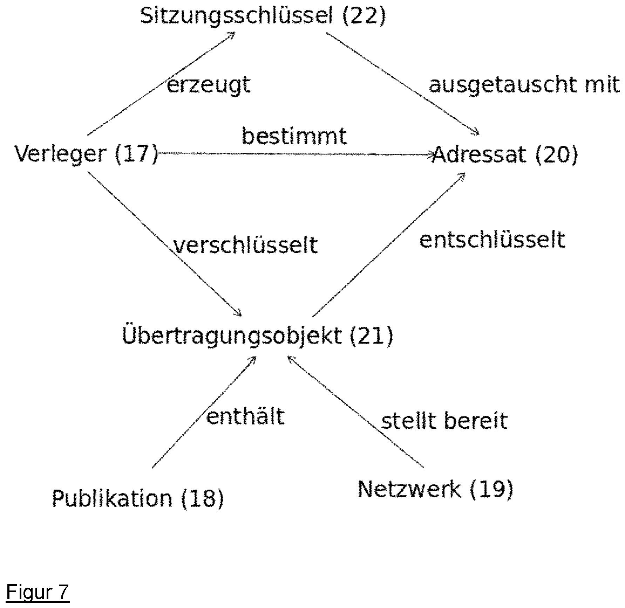

In Figur 7 ist das zu den grundlegenden Voraussetzungen zählende Verteilungsmodell hinsichtlich einer Leseberechtigung dargestellt. Demnach bestimmt der Verleger 17 auch diejenige Entität oder diejenigen Entitäten, die lesenden Zugriff auf die Publikation 18 besitzen sollen. Diese Entitäten sind die Adressaten 20 bzw. beabsichtigten Empfänger der Publikation. Aus der Publikation bildet der Verleger ein Übertragungsobjekt (21), indem der Verleger die Publikation mit einem zufällig erzeugten Sitzungsschlüssel (22) verschlüsselt. Der Sitzungsschlüssel wird mit den Adressaten in verschlüsselter Form unter Nutzung ihrer öffentlichen Schlüssel ausgetauscht. Der Verleger stellt das Übertragungsobjekt im Netzwerk bereit.

Das Übertragungsobjekt wird wie zuvor die Publikation ebenfalls durch dessen kryptographische Prüfsumme (Hashwert) adressiert.

Die Nutzung von Verschlüsselung definiert somit die Leseberechtigung des Verteilungsmodells.

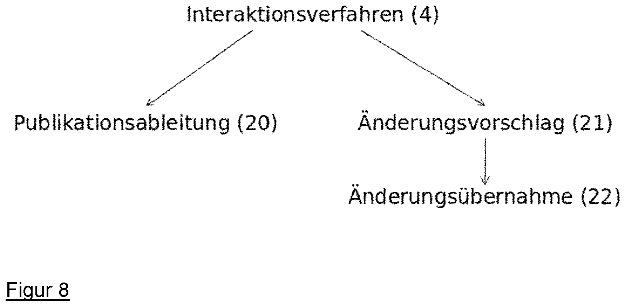

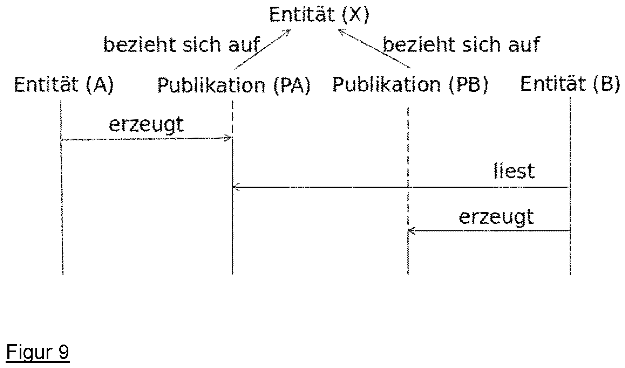

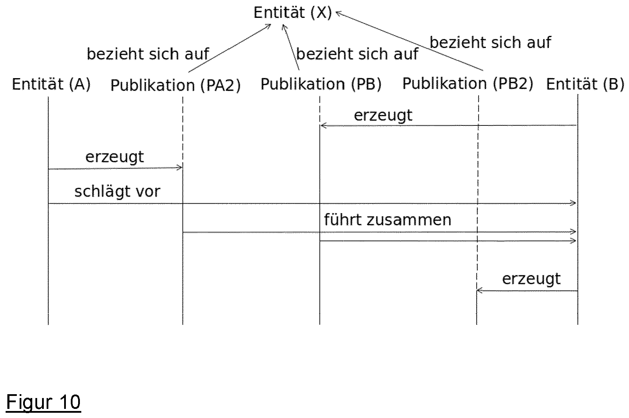

In Figur 8 ist das zu den grundlegenden Voraussetzungen zählende Interaktionsmodell dargestellt. Aufbauend auf dem Verteilungsmodell bietet das vorgeschlagene Interaktionsmodell drei mögliche Aktionen zur Interaktion im Lebenszyklus.
- Durch die Publikationsableitung 20 kann eine Entität eine neue Publikation basierend auf einer anderen Publikation erzeugen (vgl. auch Figur 9).
- Durch den Änderungsvorschlag 21 signalisiert ein Verleger einem anderen Verleger, dass Änderungen an einer Entität in Form einer neuen Publikation vorliegen und empfiehlt gleichzeitig deren Übernahme (vgl. auch Figur 10).
- Der andere Verleger kann sich zur Änderungsübernahme 22 entscheiden (vgl. auch Figur 11) oder den Änderungsvorschlag ablehnen.

In Figur 9 ist der Ablauf einer Publikationsableitung (vgl. auch Figur 8) dargestellt. Die Publikationsableitung basiert auf den im Verteilungsmodell 3 definierten Methoden zum Lesen und Schreiben von Informationen (vgl. Figuren 6 und 7). Die Publikationsableitung erlaubt das Bereitstellen und damit die Weitergabe von Informationen über eine Entität X von einer Entität A an eine Entität B. Dabei erzeugt die Entität A zunächst eine Publikation PA, die sich auf die Entität X bezieht und einen Änderungsstand enthält bzw. auf einen verweist. Als Verleger der Publikation bestimmt die Entität A die Entität B als einen der Adressaten. Dadurch kann die Entität B den Inhalt der Publikation lesen. Mit den vorliegenden Daten kann die Entität B eine neue Publikation PB ableiten. Die Publikation PB kann dabei auf den gleichen Änderungsstand verweisen wie Publikation PA, das heißt sie unterscheiden sich lediglich in dem Verleger (hier A und B), wenn beispielsweise Entität B alle Änderungen 1:1 von Entität A bezüglich der Entität X übernimmt, oder die Publikation PB enthält oder verweist bereits auf einen neuen Änderungsstand, das heißt sie unterscheidet sich auch inhaltlich von der Publikation PA wenn beispielsweise Entität B den Änderungsstand von Entität A bezüglich der Entität X übernimmt und vor der Veröffentlichung eine eigene Änderung hinzufügt.

Die folgende Tabelle zeigt Beispiele für die Entität A gemäß Figur 9, welche für die Entität B anlässlich bestimmter Ereignisse Publikationen/Änderungsstände mit Daten/Informationen bezüglich der Entität X veröffentlicht/bereitstellt.

| **Ereignis** | **Publikation bezüglich Entität X** | **Entität A** | **Entität B** |
|---|---|---|---|
| Abschluss der Konstruktion | Schaltplan | Elektro-konstrukteur | Disponent (Beschaffung) |
| Abschluss der Konstruktion | Schaltschrank 3D-Modell | Mechanickonstrukteur | Disponent (Beschaffung) |
| Gerät geprüft und Seriennummer erzeugt | Stromversor-gung Gerät mit Seriennummer 21751T0352 | Leitsystem an der Produktions-anlage | Inbetriebnahmeingenieur |
| Abschluss der Parametrie-rung | Stromversor-gung | Inbetriebnahmeinge nieur | Servicemit-arbeiter |
| | Gerät mit Seriennummer 21751T0352 | | |
| Änderung der Parametrie-rung | Stromversor-gung | Servicemit-arbeiter | Servicemit-arbeiter |
| | Gerät mit Seriennummer 21751T0352 | | |

In Figur 10 ist der Ablauf eines Änderungsvorschlags mit anschließender Änderungsübernahme (vgl. auch Figur 8) dargestellt. Dieser erlaubt die Weitergabe von geänderten Informationen über eine Entität X von einer Entität A an eine Entität B. Vorbedingung ist, dass Entität B bereits eine Publikation PB abgeleitet hat, die sich auf Entität X bezieht. Diese Publikation PB kann beispielsweise durch eine vorhergehende Publikationsableitung 20 erzeugt worden sein vgl. auch Figur 9). Entität A erzeugt nun eine neue Publikation PA2, die sich wiederum auf Entität X bezieht und einen neuen Änderungsstand enthält bzw. auf einen verweist. Entität A schlägt nun den neuen Änderungsstand bzw. den diesem Änderungsstand zugeordneten Namen aus der Publikation PA2 als Änderungsvorschlag der Entität B vor. Der Vorschlag wird durch das Netzwerk 19 oder einen anderen Kommunikationskanal an Entität B übermittelt. Da das Netzwerk als ein auf Blockchain-Technologie basierendes dezentral verteiltes Speichersystem ausgebildet ist, wird der Vorschlag in Form einer Transaktion (dauerhafte Mitteilung) bereitgestellt, welche als Informationen insbesondere die Adresse des Senders bzw. Verlegers, die Adresse des Empfängers, die Adresse der Entität, auf die sich der Änderungsstand bezieht und die Adresse oder den Namen (zum Beispiel "master" oder "dev") des Änderungsstandes enthält.

Vom Vorliegen eines neuen Änderungsvorschlags kann ein Empfänger auf verschiedene Weise erfahren. Er kann zum Beispiel "on-demand" aktiv nach vorliegenden Änderungsvorschlägen suchen. Alternativ kann der Empfänger "on-subscription" automatisch benachrichtigt werden, indem im System eintreffende Änderungen abonniert. Oder der Sender bzw. Verleger des Änderungsvorschlags kontaktiert den Empfänger auf einem Kommunikationskanal außerhalb der Systems, zum Beispiel per Messenger, E-Mail, Telefon, Brief.

Nach einem erfolgten Änderungsvorschlag entscheidet Entität B, ob der Änderungsvorschlag übernommen werden oder abgelehnt werden soll. Soll der Änderungsvorschlag aus Publikation PA2 abgelehnt werden, erfolgt keine weitere Interaktion. Soll der Änderungsvorschlag aber übernommen werden, erzeugt Entität B eine neue Publikation PB2, welche entweder den Änderungsstand aus PB und PA2 zusammenführt indem sie auf beide verweist oder allein den Änderungsstand aus PA2 übernimmt, indem sie nur auf diesen verweist.

Um aktiv nach vorliegenden Änderungsvorschlägen bzw. Änderungsständen, die einen Änderungsvorschlag darstellen, zu suchen, kann der Empfänger zum Beispiel die Blockchain bzw. das Blockchain-Speichersystem nach Transaktionen durchsuchen, die Angaben bezüglich eines an den Empfänger gerichteten und/oder die Entität betreffenden Änderungsstands enthalten. Dies ist zum einen möglich, da in den Transaktionen bevorzugt auch die Adressen des Senders und Empfängers, das heißt deren öffentliche Schlüssel bzw. die darauf basierend generierten ersten Hashwerte, als Teil der Transaktionsdaten gespeichert sind. Zum anderen kann es Transaktionen geben, in denen die Adressen von Änderungsständen (oder Datenobjekten) und Entitäten zwecks gegenseitiger Zuordnung gespeichert sind. Es können auch die Namen von Änderungsständen in Transaktionen gespeichert sein. Dabei kann der Empfänger zum Beispiel eine Liste von Transaktionen in der Blockchain oder eine daraus abgeleitete indexierende Struktur durchsuchen, wie zum Beispiel die sogenannten Event Logs im Fall der Blockchain-Service-Plattform Ethereum. Hat der Empfänger eine Transaktion ermittelt, kennt er nun auch den Sender des Änderungsvorschlages. Daraufhin bezieht der Empfänger das in der Transaktion adressierte Datenobjekt und entschlüsselt es gegebenenfalls. Nun kann der Empfänger den Inhalt des Änderungsstands aus dem Datenobjekt, das heißt die vom Sender vorgeschlagenen Änderungen, mit einem anderen beim Empfänger vorliegenden Änderungsstand vergleichen. Die den Änderungsständen gegebenenfalls zugeordneten Namen erleichtern das gezielte Sichten oder Vergleichen von mehreren Änderungsständen. Wenn der Empfänger die vorgeschlagene Änderung akzeptieren möchte, kann er die beiden Änderungsstände zusammenführen und erzeugt einen neuen Änderungsstand.

## Patentansprüche

1. Verfahren zum sicheren Bereitstellen von Daten eines Feldgeräts der Automatisierungstechnik über dessen gesamten Lebenszyklus,
wobei der Lebenszyklus des Feldgeräts bereits vor seiner Herstellung beginnt, wobei das Feldgerät vor seiner Herstellung als Feldgerättyp (6) vorliegt, und
wobei das Feldgerät mit Beginn seiner Herstellung als wenigstens eine Feldgerätinstanz (7) vorliegt,
wobei jede Feldgerätinstanz (7) von dem Feldgerättyp (6) abgeleitet wird, und
wobei jeder Feldgerättyp (6) und jede Feldgerätinstanz (7) durch eine jeweilige eigene Entität (8) repräsentiert wird, die anhand einer kryptografischen Identität identifizierbar gemacht wird, indem für jede Entität (8) ein asymmetrisches Schlüsselpaar (10), umfassend einen öffentlichen und einen privaten Schlüssel, generiert wird, und der eine Adresse oder ein als Adresse fungierender erster Hashwert zugeordnet wird,
umfassend die weiteren Schritte:
- a) Erzeugen von Daten, die die Feldgerätinstanz (7) betreffen,
- b) Generieren eines zweiten Hashwerts basierend auf den in Schritt a) erzeugten Daten mittels einer kryptographischen Hashfunktion,
- c) Erzeugen eines Änderungsstands (13),
- d) Speichern der im Schritt a) erzeugten Daten und des in Schritt b) generierten zweiten Hashwerts als Nutzdaten in dem im Schritt c) erzeugten Änderungsstand (13),
- e) Generieren eines drittes Hashwerts basierend auf dem Änderungsstand (13) mittels einer kryptographischen Hashfunktion, wobei der dritte Hashwert als Adresse des Änderungsstands (13) dient,
- f) Erzeugen eines Datenobjekts,
- g) Speichern des Änderungsstands (13) und des dritten Hashwerts in dem in Schritt f) erzeugten Datenobjekt, und
- h) Speichern des Datenobjekts in einem dezentral verteilten inhaltsadressierten Speichersystem,
wobei in Schritt d) im Fall einer neu aus dem Feldgerättyp (6) abgeleiteten Feldgerätinstanz (7) in dem in Schritt c) erzeugten Änderungsstand (13) dieser Feldgerätinstanz (7) zusätzlich zu den Nutzdaten der dritte Hashwert eines Änderungsstands (13) des Feldgerättyps (6) als Zusatzdaten gespeichert wird.

2. Verfahren nach dem vorherigen Anspruch,
wobei als Adresse der Entität (8) der öffentliche Schlüssel der Entität, oder ein erster Hashwert dient, der mittels einer kryptografischen Hashfunktion basierend auf dem öffentlichen Schlüssel der Entität (8) generiert wird.

3. Verfahren nach einem der vorherigen Ansprüche,
wobei die das Feldgerät betreffenden Daten Merkmale des Feldgeräts spezifizieren und wobei diese Daten
- Eigenschaften und Funktionen des Feldgeräts beschreiben, oder
- Gerätekonfigurationsinformationen wie Projektierungsparameter, Betriebsmodusinformationen, Lizenz- oder Berechtigungsinformationen, Sicherheitszoneninformationen, Informationen zu Patches oder Softwareupdates oder Vorschriften für zulässige Konfigurationseinstellungen umfassen, oder
- Verfügbarkeits- oder Freigabeinformationen wie Ausführungsberechtigungen auf bestimmten Geräten oder Gerätetypen oder Lizenzinformationen zu einem Softwarecode, einem Patch oder einer Firmware enthalten, oder
- Handbücher, Schaltpläne oder CAD-Zeichnungen umfassen.

4. Verfahren nach einem der vorherigen Ansprüche,
wobei die in einem Änderungsstand (13) gespeicherten das Feldgerät betreffenden Daten in Dateien (15) und Ordnern (14) hierarchisch strukturiert sind,
wobei beginnend an der untersten Hierarchieebene bis zur obersten Hierarchieebene schrittweise je nach Anzahl vorhandener Dateien (15) und/oder Ordner (14) mindestens ein Dateihashwert und/oder Ordnerhashwert generiert wird,
wobei für jede Datei (15) ein Dateihashwert generiert wird basierend auf deren Dateiinhalt mittels einer kryptographischen Hashfunktion,
wobei für jeden nur eine Anzahl von Dateien (15) enthaltenen Ordner (14) ein Ordnerhashwert generiert wird basierend auf den Dateinamen und Dateihashwerten der im Ordner (14) enthaltenen Dateien (15) mittels einer kryptographischen Hashfunktion,
wobei für jeden nur eine Anzahl von Ordnern enthaltenen Ordner (14) ein Ordnerhashwert generiert wird basierend auf den Ordnernamen und Ordnerhashwerten der im Ordner enthaltenen Ordner (14) mittels einer kryptographischen Hashfunktion,
wobei für jeden eine Anzahl von Ordnern (14) und eine Anzahl von Dateien (15) enthaltenen Ordner ein Ordnerhashwert generiert wird basierend auf den Ordnernamen und Ordnerhashwerten der im Ordner (14) enthaltenen Ordner sowie basierend auf den Dateinamen und Dateihashwerten der im Ordner (14) enthaltenen Dateien (15) mittels einer kryptographischen Hashfunktion,
wobei in Schritt b) der zweite Hashwert generiert wird basierend auf den Ordnernamen und Ordnerhashwerten der auf der obersten Hierarchieebene vorhandenen Ordner (14) und/oder basierend auf den Dateinamen und Dateihashwerten der auf der obersten Hierarchieebene vorhandenen Dateien (15) mittels einer kryptographischen Hashfunktion.

5. Verfahren nach einem der vorherigen Ansprüche,
wobei in Schritt d) zusätzlich zu den Nutzdaten ein Änderungsautor, ein Änderungsdatum, eine Änderungszeit, ein Änderungsbeschreibungstext und/oder ein Datenvolumenwert als Zusatzdaten in dem in Schritt c) erzeugten Änderungsstand gespeichert werden.

6. Verfahren nach einem der vorherigen Ansprüche,
wobei in Schritt d) zusätzlich zu den Nutzdaten die Adresse der Entität (8) als Zusatzdaten in dem in Schritt c) erzeugten Änderungsstand (13) gespeichert wird.

7. Verfahren nach einem der vorherigen Ansprüche,
wobei in Schritt g) für den Änderungsstand (13) ein Name erzeugt und dem Änderungsstand (13) zugeordnet wird und ebenfalls in dem in Schritt f) erzeugten Datenobjekt gespeichert wird.

8. Verfahren nach einem der vorherigen Ansprüche,
wobei in Schritt d) zusätzlich zu den Nutzdaten der dritte Hashwert eines älteren Änderungsstands (13) oder die dritten Hashwerte mehrerer älterer Änderungsstände (13) als Zusatzdaten in dem in Schritt c) erzeugten Änderungsstand (13) gespeichert wird oder werden.

9. Verfahren nach einem der vorherigen Ansprüche,
wobei in Schritt d) in dem in Schritt c) erzeugten Änderungsstand (13) einer bestehenden Feldgerätinstanz (7) zusätzlich zu den Nutzdaten der dritte Hashwert eines Änderungsstands (13) des Feldgerättyps (6) als Zusatzdaten gespeichert wird.

10. Verfahren nach einem der zwei vorherigen Ansprüche,
wobei in Schritt d) in dem in Schritt c) erzeugten Änderungsstand (13) eines Feldgerättyps (6) zusätzlich zu den Nutzdaten der dritte Hashwert eines Änderungsstands (13) eines anderen Feldgerättyps (6) oder die dritten Hashwerte von Änderungsständen (13) mehrerer anderer Feldgerättypen (6) als Zusatzdaten gespeichert wird oder werden.

11. Verfahren nach einem der vorherigen Ansprüche,
wobei das dezentral verteilte inhaltsadressierte Speichersystem gemäß dem InterPlanetary File System (IPFS) ausgebildet ist.

12. Verfahren nach einem der vorherigen Ansprüche,
wobei eine in das Verfahren involvierte Person ebenfalls durch eine eigene Entität repräsentiert wird.

13. Verfahren nach einem der vorherigen Ansprüche,
wobei in Schritt g) nach dem Speichern des Änderungsstands in dem Datenobjekt das Datenobjekt mittels eines zufällig erzeugten symmetrischen Sitzungsschlüssels verschlüsselt wird.

14. Verfahren nach dem vorherigen Anspruch,
wobei in Schritt g) nach dem Verschlüsseln der symmetrische Sitzungsschlüssels mit dem asymmetrischen öffentlichen Schlüssel eines beabsichtigten Empfängers verschlüsselt wird.

15. Verfahren nach einem der vorherigen Ansprüche,
wobei in Schritt g) ein vierter Hashwert basierend auf dem Datenobjekt mittels einer kryptographischen Hashfunktion generiert wird, wobei der vierte Hashwert als Adresse des Datenobjekts dient.

16. Verfahren nach dem vorherigen Anspruch,
wobei zu dem in Schritt g) gespeicherten Änderungsstand (13) eine dauerhafte Mitteilung erzeugt und in einem dezentral verteilten auf Blockchain-Technologie basierenden Speichersystem gespeichert wird,
wobei in dem dezentral verteilten auf Blockchain-Technologie basierenden Speichersystem ein Datenblock gespeichert ist, der einen Dateninhalt und einen Hashwert umfasst, wobei der Hashwert mittels einer kryptografischen Hashfunktion basierend auf dem Dateninhalt des Datenblocks generiert wurde und als Adresse des Datenblocks dient,
aufweisend die weiteren Schritte:
- i) Erzeugen einer Transaktion,
- j) Speichern des vierten Hashwerts als Teil von Transaktionsdaten in der Transaktion aus Schritt i) und damit Verknüpfen der Transaktion mit dem Datenobjekt aus Schritt h), in welchem der Änderungsstand gespeichert ist,
- k) Erzeugen eines Datenblocks,
- 1) Speichern der Transaktion als Dateninhalt in dem Datenblock aus Schritt k),
- m) Ermitteln eines fünften Hashwertes, welcher der Hashwert des zuletzt in dem dezentral verteilten auf Blockchain-Technologie basierenden Speichersystem gespeicherten Datenblocks ist,
- n) Speichern des fünften Hashwerts als Dateninhalt in dem Datenblock aus Schritt k),
- o) Generieren eines Hashwerts für den Datenblock basierend auf dem Dateninhalt des Datenblocks mittels einer kryptografischen Hashfunktion, wobei der Hashwert als Adresse des Datenblocks dient,
- p) Speichern des im Schritt o) generierten Hashwerts in dem Datenblock, und
- q) Speichern des Datenblocks in dem dezentral verteilten auf Blockchain-Technologie basierenden Speichersystem, in welchem auch die zu früheren Zeitpunkten erstellten Datenblöcke gespeichert sind.

17. Verfahren nach den vier vorherigen Ansprüchen,
wobei im Schritt j) der verschlüsselte Sitzungsschlüssel als weiterer Teil der Transaktionsdaten in der Transaktion aus Schritt i) gespeichert wird.

18. Verfahren nach einem der vorherigen Ansprüche,
wobei die Verfahrensschritte a) bis g) oder a) bis q) von einer Feldgerätinstanz (7) durchgeführt werden.

19. Verfahren nach einem der vorherigen Ansprüche,
wobei bedarfsweise oder ereignisabhängig die Verfahrensschritte a) bis g) oder a) bis q) wiederholt ausgeführt werden.

20. System zum Durchführen des Verfahrens zum sicheren Bereitstellen von Daten eines Feldgeräts der Automatisierungstechnik über dessen gesamten Lebenszyklus gemäß einem der vorherigen Ansprüche,
umfassend ein Kommunikationsnetz (N) mit wenigstens zwei Teilnehmerknoten (K1, K2, K3, K4), welche jeweils eine Speichereinrichtung und eine Verarbeitungseinrichtung sowie eine Kommunikationseinrichtung zum Ankoppeln an und Kommunizieren über das Kommunikationsnetz aufweisen, wobei Daten eines Feldgeräts in der Speichereinrichtung speicherbar und über die Kommunikationseinrichtung wenigstens einem weiterem Teilnehmerknoten im Kommunikationsnetz bereitstellbar sind,
wobei in der Speichereinrichtung ein maschinenausführbarer Programmcode gespeichert ist, der bei Ausführung durch die Verarbeitungseinrichtung das Bereitstellen der Daten eines Feldgeräts entsprechend dem Verfahren nach einem der vorherigen Ansprüche bewirkt, und
wobei das System als dezentral verteiltes inhaltsadressiertes Speichersystem ausgebildet ist.

## Claims

1. A method for securely providing data of a field device of automation technology over its entire life cycle,
wherein the life cycle of the field device already begins before its manufacture,
the field device being present as a field device type (6) before its manufacture, and
the field device being present as at least one field device instance (7) at the start of its production,
each field device instance (7) being derived from the field device type (6), and
wherein each field device type (6) and each field device instance (7) is represented by a respective own entity (8) which is made identifiable by means of a cryptographic identity by generating for each entity (8) an asymmetric key pair (10) comprising a public and a private key, and to which an address or a hash value operating as an address is assigned, comprising the further steps of:
- (a) generating data pertaining to the field device instance (7),
- b) generating a second hash value based on the data generated in step a) using a cryptographic hash function,
- c) generating a revision state (13),
- d) storing the data generated in step a) and the second hash value generated in step b) as payload data in the revision state (13) generated in step c),
- e) generating a third hash value based on the revision state (13) using a cryptographic hash function, the third hash value serving as the address of the revision state (13),
- f) generating a data object,
- g) storing the revision state (13) and the third hash value in the data object generated in step f), and
- h) storing the data object in a decentralized distributed content-addressed storage system,
wherein in step d), in the case of a field device instance (7) newly derived from the field device type (6), the third hash value of the revision state (13) of the field device type (6) is stored as additional data in the revision state (13) of this field device instance (7) generated in step c) in addition to the user data.

2. The method according to the previous claim,
wherein the public key of the entity or a first hash value which is generated using a cryptographic hash function on the basis of the public key of the entity is used as the address of the entity.

3. The method according to any one of the preceding claims,
wherein the data concerning the field device specify features of the field device, and wherein these data
- describing features and functions of the field device, or
- device configuration information such as projection parameters, operating mode information, license or authorization information, security zone information, patch or software update information, or rules for acceptable configuration settings, or
- include availability or release information such as execution permissions on specific devices or device types, or licensing information about a software code, patch, or firmware; or
- include manuals, schematics, or CAD drawings.

4. The method according to any one of the preceding claims,
wherein the data relating to the field device stored in a revision state (13) is hierarchically structured in files (15) and folders (14),
wherein starting at the lowest hierarchy level up to the highest hierarchy level, at least one file hash value and/or folder hash value is generated stepwise depending on the number of existing files (15) and/or folders (14),
wherein for each file (15) a file hash value is generated based on its file content using a cryptographic hash function,
wherein for each folder (14) containing only a number of files (15) a folder hash value is generated based on the file names and file hash values of the files (15) contained in the folder (14) using a cryptographic hash function,
wherein for each folder (14) containing only a number of folders a folder hash value is generated based on the folder names and folder hash values of the folders (14) contained in the folder by means of a cryptographic hash function,
wherein for each folder containing a number of folders (14) and a number of files (15) a folder hash value is generated based on the folder names and folder hash values of the folders contained in the folder (14) and based on the file names and file hash values of the files (15) contained in the folder (14) using cryptographic hash function,
wherein in step b) the second hash value is generated based on the folder names and folder hash values of the folders (14) present on the highest hierarchical level and/or based on the file names and file hash values of the files (15) present on the highest hierarchical level using a cryptographic hash function.

5. The method according to any one of the preceding claims,
wherein in step d), in addition to the user data, a revision author, a revision date, a revision time, a revision description text and/or a data volume value are stored as additional data in the revision state generated in step c).

6. The method according to any of the preceding claims,
wherein in step d), in addition to the user data, the address of the entity (8) is stored as additional data in the revision state (13) generated in step c).

7. The method according to any one of the preceding claims,
wherein in step g) a name is generated for the revision state (13) and assigned to the revision state (13) and is also stored in the data object generated in step f).

8. The method according to any one of the preceding claims,
wherein in step d), in addition to the payload data, the third hash value of an older revision state (13) or the third hash values of several older revision states (13) is or are stored as additional data in the revision state (13) generated in step c).

9. The method according to one of the previous claims,
wherein in step d) the third hash value of a revision state (13) of the field device type (6) is stored as additional data in the revision state (13) of an existing field device instance (7) generated in step c) in addition to the user data.

10. The method according to one of the two preceding claims,
wherein in step d), in the revision state (13) of a field device type (6) generated in step c), in addition to the payloaed data, the third hash value of a revision state (13) of another field device type (6) or the third hash values of revision states (13) of several other field device types (6) is or are stored as additional data.

11. The method according to any one of the preceding claims,
wherein the decentralized distributed content addressed storage system is formed according to the InterPlanetary File System (IPFS).

12. The method according to any one of the preceding claims,
wherein a person involved in the method is also represented by a separate entity.

13. The method according to any one of the preceding claims,
wherein in step g) after storing the revision state in the data object, the data object is encrypted using a randomly generated symmetric session key.

14. The method according to the previous claim,
wherein, in step g), after the encryption, the symmetric session key is encrypted with the asymmetric public key of an intended recipient.

15. The method according to any one of the preceding claims,
wherein in step g) a fourth hash value is generated based on the data object using a cryptographic hash function, the fourth hash value serving as the address of the data object.

16. The method according to the previous claim,
wherein a persistent message is generated for the revision state (13) stored in step g) and stored in a decentrally distributed storage system based on blockchain technology,
wherein a data block is stored in the decentrally distributed storage system based on blockchain technology, which data block comprises a data content and a hash value, wherein the hash value has been generated using a cryptographic hash function based on the data content of the data block and serves as the address of the data block,
comprising the further steps of:
- (i) generating a transaction,
- j) storing the fourth hash value as part of transaction data in the transaction of step i) and thereby linking the transaction to the data object of step h) in which the revision state is stored,
- k) generating a data block,
- 1) storing the transaction as data content in the data block from step k),
- m) determining a fifth hash value, which is the hash value of the most recent data block stored in the decentralized distributed storage system based on blockchain technology,
- (n) storing the fifth hash value as data content in the data block from step (k),
- o) generating a hash value for the data block based on the data content of the data block using a cryptographic hash function, the hash value serving as the address of the data block,
- p) storing the hash value generated in step o) in the data block, and
- q) storing the data block in the decentrally distributed storage system based on blockchain technology, in which the data blocks created at earlier times are also stored.

17. The method according to the previous four claims,
wherein in step j) the encrypted session key is stored as a further part of the transaction data in the transaction from step i).

18. The method according to any one of the preceding claims,
wherein method steps a) to g) or a) to q) are performed by a field device instance (7).

19. The method according to any one of the preceding claims,
wherein the method steps a) to g) or a) to q) are repeatedly executed if required or depending on the event.

20. A system for carrying out the method for securely providing data of a field device of the automation technology over its entire life cycle according to one of the previous claims,
comprising a communication network (N) having at least two subscriber nodes (K1, K2, K3, K4), each having a storage device and a processing device, and a communication device for coupling to and communicating via the communication network,
wherein data of a field device can be stored in the storage device and can be made available to at least one further subscriber node in the communication network via the communication device,
wherein a machine-executable program code is stored in the storage means which, when executed by the processing device, causes the data of a field device to be provided in accordance with the method according to one of the preceding claims, and
wherein the system is configured as a decentralized distributed content addressed storage system.

## Revendications

1. Procédé pour la fourniture sécurisée de données d'un appareil de terrain de la technique d'automatisation pendant tout le cycle de vie de celui-ci,
dans lequel le cycle de vie de l'appareil de terrain commence déjà avant sa fabrication,
dans lequel l'appareil de terrain est présent avant sa fabrication en tant que type d'appareil de terrain (6), et
dans lequel l'appareil de terrain est présent au début de sa fabrication en tant qu'au moins une instance d'appareil de terrain (7),
dans lequel chaque instance d'appareil de terrain (7) est dérivée du type d'appareil de terrain (6), et
dans lequel chaque type d'appareil de terrain (6) et chaque instance d'appareil de terrain (7) est représenté(e) par une entité (8) propre respective, qui est rendue identifiable à l'aide d'une identité cryptographique, du fait que pour chaque entité (8) une paire de clés (10) asymétrique, comprenant une clé publique et une clé privé, est générée, et à laquelle une adresse ou une première valeur de hachage fonctionnant comme une adresse est associée,
comprenant les autres étapes consistant à :
- a) produire des données, qui concernent l'instance d'appareil de terrain (7),
- b) générer une deuxième valeur de hachage sur la base des données produites à l'étape a) au moyen d'une fonction de hachage cryptographique,
- c) produire un état de modification (13),
- d) mettre en mémoire les données produites à l'étape a) et la deuxième valeur de hachage générée à l'étape b) en tant que données utiles dans l'état de modification (13) produit à l'étape c),
- e) générer une troisième valeur de hachage sur la base de l'état de modification (13) au moyen d'une fonction de hachage cryptographique, la troisième valeur de hachage servant d'adresse de l'état de modification (13),
- f) produire un objet de données,
- g) mettre en mémoire l'état de modification (13) et la troisième valeur de hachage dans l'objet de données produit à l'étape f), et
- h) mettre en mémoire l'objet de données dans un système de mémoire adressé par le contenu et distribué de manière décentralisée,
dans lequel, à l'étape d), dans le cas d'une instance d'appareil de terrain (7) à nouveau dérivée du type d'appareil de terrain (6) dans l'état de modification (13) produit à l'étape c) de cette instance d'appareil de terrain (7), la troisième valeur de hachage d'un état de modification (13) du type d'appareil de terrain (6) est mise en mémoire en tant que données supplémentaires en plus des données utiles.

2. Procédé selon la revendication précédente,
dans lequel la clé publique de l'entité, ou une première valeur de hachage, qui est générée au moyen d'une fonction de hachage cryptographique sur la base de la clé publique de l'entité (8), sert d'adresse de l'entité (8).

3. Procédé selon l'une quelconque des revendications précédentes,
dans lequel les données concernant l'appareil de terrain spécifient des caractéristiques de l'appareil de terrain et dans lequel ces données
- décrivent des propriétés et fonctions de l'appareil de terrain, ou
- comprennent des informations de configuration d'appareil telles que des paramètres de projection, des informations de mode de fonctionnement, des informations de licence ou d'autorisation, des informations de zone de sécurité, des informations concernant des correctifs ou mises à jour de logiciels ou des prescriptions pour des réglages de configuration admissibles, ou
- contiennent des informations de disponibilité ou de validation telles que des autorisations d'exécution sur certains appareils ou types d'appareils ou des informations de licence concernant un code logiciel, un correctif ou un micrologiciel, ou
- comprennent des manuels, schémas de montage ou dessins de CAO.

4. Procédé selon l'une quelconque des revendications précédentes,
dans lequel les données concernant l'appareil de terrain mises en mémoire dans un état de modification (13) sont structurées de manière hiérarchique dans des fichiers (15) et classeurs (14),
dans lequel en commençant au niveau hiérarchique le plus bas jusqu'au niveau hiérarchique le plus haut au moins une valeur de hachage de fichier et/ou valeur de hachage de classeur est générée progressivement en fonction du nombre de fichiers (15) et/ou classeurs (14) présents,
dans lequel pour chaque fichier (15) une valeur de hachage de fichier est générée sur la base de son contenu de fichier au moyen d'une fonction de hachage cryptographique,
dans lequel pour chaque classeur (14) contenu seulement un certain nombre de fichiers (15) une valeur de hachage de classeur est générée sur la base des noms de fichiers et des valeurs de hachage de fichier des fichiers (15) contenus dans le classeur (14) au moyen d'une fonction de hachage cryptographique,
dans lequel pour chaque classeur (14) contenu seulement un certain nombre de classeurs une valeur de hachage de classeur est générée sur la base des noms de classeur et valeurs de hachage de classeur des classeurs (14) contenus dans le classeur au moyen d'une fonction de hachage cryptographique,
dans lequel pour chaque classeur contenu un certain nombre de classeurs (14) et un certain nombre de fichiers (15) une valeur de hachage de classeur est générée sur la base des noms de classeur et valeurs de hachage de classeur des classeurs contenus dans le classeur (14) ainsi que sur la base des noms de fichier et valeurs de hachage de fichier des fichiers (15) contenus dans le classeur (14) au moyen d'une fonction de hachage cryptographique,
dans lequel à l'étape b) la deuxième valeur de hachage est générée sur la base des noms de classeur et valeurs de hachage de classeur des classeurs (14) présents au niveau hiérarchique le plus haut et/ou sur la base des noms de fichier et valeurs de hachage de fichier des fichiers (15) présents au niveau hiérarchique le plus haut au moyen d'une fonction de hachage cryptographique.

5. Procédé selon l'une quelconque des revendications précédentes,
dans lequel, à l'étape d), en plus des données utiles, un auteur de modification, une date de modification, un temps de modification, un texte de description de modification et/ou une valeur de volume de données sont mis en mémoire en tant que données supplémentaires dans l'état de modification produit à l'étape c).

6. Procédé selon l'une quelconque des revendications précédentes,
dans lequel, à l'étape d), l'adresse de l'entité (8) est mise en mémoire en tant que données supplémentaires en plus des données utiles dans l'état de modification (13) produit à l'étape c).

7. Procédé selon l'une quelconque des revendications précédentes,
dans lequel, à l'étape g), pour l'état de modification (13), un nom est produit et associé à l'état de modification (13) et également mis en mémoire dans l'objet de données produit à l'étape f).

8. Procédé selon l'une quelconque des revendications précédentes,
dans lequel, à l'étape d), en plus des données utiles, la troisième valeur de hachage d'un état de modification (13) plus ancien ou les troisièmes valeurs de hachage de plusieurs états de modification (13) plus anciens est ou sont mise(s) en mémoire en tant que données supplémentaires dans l'état de modification (13) produit à l'étape c).

9. Procédé selon l'une quelconque des revendications précédentes,
dans lequel, à l'étape d), dans l'état de modification (13) produit à l'étape c) d'une instance d'appareil de terrain (7) existante, la troisième valeur de hachage d'un état de modification (13) du type d'appareil de terrain (6) est mise en mémoire en tant que données supplémentaires en plus des données utiles.

10. Procédé selon l'une des deux revendications précédentes,
dans lequel, à l'étape d), dans l'état de modification (13) d'un type d'appareil de terrain (6) produit à l'étape c), la troisième valeur de hachage d'un état de modification (13) d'un autre type d'appareil de terrain (6) ou les troisièmes valeurs de hachage d'états de modification (13) de plusieurs autres types d'appareil de terrain (6) est ou sont mise(s) en mémoire en tant que données supplémentaires en plus des données utiles.

11. Procédé selon l'une quelconque des revendications précédentes,
dans lequel le système de mémoire adressé par le contenu distribué de manière décentralisée est réalisé selon l'InterPlanetary File System (IPFS).

12. Procédé selon l'une quelconque des revendications précédentes,
dans lequel une personne impliquée dans le procédé est également représentée par une entité propre.

13. Procédé selon l'une quelconque des revendications précédentes,
dans lequel, à l'étape g), après la mise en mémoire de l'état de modification dans l'objet de données, l'objet de données est chiffré au moyen d'une clé de cession symétrique produite de manière aléatoire.

14. Procédé selon la revendication précédente,
dans lequel, à l'étape g), après le chiffrement, la clé de cession symétrique est chiffrée avec la clé publique asymétrique d'un récepteur prévu.

15. Procédé selon l'une quelconque des revendications précédentes,
dans lequel, à l'étape g), une quatrième valeur de hachage est générée sur la base de l'objet de données au moyen d'une fonction de hachage cryptographique, la quatrième valeur de hachage servant d'adresse de l'objet de données.

16. Procédé selon la revendication précédente,
dans lequel, concernant l'état de modification (13) mis en mémoire à l'étape g), une communication permanente est produite et mise en mémoire dans un système de mémoire distribué de manière décentralisée et basé sur la technologie de la chaîne de blocs,
dans lequel un bloc de données, qui comprend un contenu de données et une valeur de hachage, est mis en mémoire dans le système de mémoire distribué de manière décentralisée et basé sur la technologie de la chaîne de blocs, dans lequel la valeur de hachage a été générée au moyen d'une fonction de hachage cryptographique sur la base du contenu de données du bloc de données et sert d'adresse du bloc de données,
présentant les autres étapes consistant à :
- i) produire une transaction,
- j) mettre en mémoire la quatrième valeur de hachage en tant que partie de données de transaction dans la transaction de l'étape i) et ainsi relier la transaction à l'objet de données de l'étape h), l'état de modification étant mis en mémoire,
- k) produire un bloc de données,
- 1) mettre en mémoire la transaction en tant que contenu de données dans le bloc de données de l'étape k),
- m) déterminer une cinquième valeur de hachage, laquelle est la valeur de hachage du bloc de données mis en mémoire en dernier dans le système de mémoire distribué de manière décentralisée et basé sur la technologie de la chaîne de blocs,
- n) mettre en mémoire la cinquième valeur de hachage en tant que contenu de données dans le bloc de données de l'étape k),
- o) générer une valeur de hachage pour le bloc de données sur la base du contenu de données du bloc de données au moyen d'une fonction de hachage cryptographique, la valeur de hachage servant d'adresse du bloc de données,
- p) mettre en mémoire la valeur de hachage générée à l'étape o) dans le bloc de données, et
- q) mettre en mémoire le bloc de données dans le système de mémoire distribué de manière décentralisée et basé sur la technologie de la chaîne de blocs, les blocs de données élaborés à des moments antérieurs étant également mis en mémoire.

17. Procédé selon les quatre revendications précédentes,
dans lequel, à l'étape j), la clé de cession chiffrée est mise en mémoire en tant qu'autre partie des données de transaction dans la transaction de l'étape i).

18. Procédé selon l'une quelconque des revendications précédentes,
dans lequel les étapes de procédé a) à g) ou a) à q) sont mises en oeuvre par une instance d'appareil de terrain (7) .

19. Procédé selon l'une quelconque des revendications précédentes,
dans lequel, si besoin est ou en fonction d'un événement, les étapes de procédé a) à g) ou a) à q) sont exécutées à plusieurs reprises.

20. Système pour la mise en oeuvre du procédé pour la fourniture sécurisée de données d'un appareil de terrain de la technique d'automatisation pendant tout le cycle de vie de celui-ci selon l'une quelconque des revendications précédentes,
comprenant un réseau de communication (N) avec au moins deux noeuds d'abonné (K1, K2, K3, K4), lesquels présentent respectivement un appareil de mémoire et un appareil de traitement ainsi qu'un appareil de communication pour le couplage au et la communication par l'intermédiaire du réseau de communication,
dans lequel les données d'un appareil de terrain peuvent être mises en mémoire dans l'appareil de mémoire et peuvent être fournies à au moins un autre noeud d'abonné dans le réseau de communication par l'intermédiaire de l'appareil de communication,
dans lequel un code de programme pouvant être exécuté par machine, qui, lors de l'exécution par l'appareil de traitement, provoque la fourniture des données d'un appareil de terrain conformément au procédé selon l'une quelconque des revendications précédentes, est mis en mémoire dans l'appareil de mémoire, et
le système étant réalisé sous la forme d'un système de mémoire adressé par le contenu et distribué de manière décentralisée.
